# EUROPEAN PATENT APPLICATION

(11) **EP 4 836 033 A1**
(43) Date of publication of application: **04.11.2026**
(21) Application number: 24912818.2
(22) Date of filing: 24.12.2024
(51) Int. Cl.: H01M 8/04, C25B 1/04, C25B 9/00, C25B 15/025, C25B 15/027, H01M 8/10, H01M 8/0432, H01M 8/04492, H01M 8/04664, H01M 8/04992

(54) **HYDROGEN ELECTROCHEMICAL SYSTEM, METHOD FOR DETERMINING STATE OF HYDROGEN CELL STACK, AND PROGRAM**

(30) Priority: 28.12.2023 JP 2023222393
(71) Applicant: HORIBA, Ltd., Minami-ku Kyoto-shi Kyoto 601-8510 (JP)
(72) Inventor: MATSUNAGA, Shimpachi, Kyoto-shi, Kyoto 601-8510 (JP); HIGA, Kazushi, Kyoto-shi, Kyoto 601-8510 (JP); YAMASHITA, Tsubasa, Kyoto-shi, Kyoto 601-8510 (JP)
(74) Representative: Müller Hoffmann & Partner
(86) International application number: PCT/JP2024/045705
(87) International publication number: WO 2025/142931

(57) **Abstract**

A hydrogen electrochemical system 100 includes an acquisition unit 541, a storage unit 53, and a determination unit 544. The acquisition unit 541 acquires at least distribution information Ds2, De2, Dt2 indicating a distribution of a physical quantity Q in a hydrogen cell stack 1. The hydrogen cell stack 1 generates water from hydrogen or hydrogen from water by an electrochemical reaction. The storage unit 53 stores the correlation information Dc. The correlation information Dc indicates a correlation between a state of the hydrogen cell stack 1 and a feature amount φ converted from at least the distribution information Ds2, De2 in the hydrogen cell stack 1 in states, including a normal state and one or more abnormal states. On the basis of the correlation information Dc, the determination unit 544 determines a state of the hydrogen cell stack 1 from at least the distribution information Dt2 of the hydrogen cell stack 1 in operation.

## Description

### Technical Field

The present invention relates to a hydrogen electrochemical system, a method for determining a state of a hydrogen cell stack, and a program.

### Background Art

Conventionally, there is known a technique of using an AC impedance method (EIS) so as to monitor a state of a fuel cell that is generating power, thereby detecting an abnormal state such as dry-out, as in Patent Document 1.

### List of Citations

### Patent Literature

Patent Document 1: JP-A-2023-154982

### Summary of the Invention

### Technical Problem

However, the AC impedance method (EIS) takes time to output a detection result of a state. For this reason, it is difficult to detect an abnormal state in real time.

In view of the above situation, it is an object of the present invention to detect a state of a hydrogen cell stack in real time.

### Means for Solving the Problem

In order to achieve the above object, a hydrogen electrochemical system according to one aspect of the present invention includes an acquisition unit, a storage unit, and a determination unit. The acquisition unit acquires at least distribution information indicating a distribution of a physical quantity in a hydrogen cell stack. The hydrogen cell stack generates water from hydrogen or hydrogen from water by an electrochemical reaction. The storage unit stores correlation information. The correlation information indicates a correlation between a state of the hydrogen cell stack and a feature amount converted from at least the distribution information in the hydrogen cell stack in states, including a normal state and one or more abnormal states. On the basis of the correlation information, the determination unit determines a state of the hydrogen cell stack in operation from at least the distribution information of the hydrogen cell stack.

In addition, in order to achieve the above object, a method for determining a state of a hydrogen cell stack, according to one aspect of the present invention, includes an acquisition step and a determination step. The hydrogen cell stack generates water from hydrogen or hydrogen from water by an electrochemical reaction. In the acquisition step, at least distribution information is acquired. The distribution information indicates a distribution of a physical quantity in the hydrogen cell stack. In the determination step, on the basis of the correlation information, a state of the hydrogen cell stack is determined from at least the distribution information of the hydrogen cell stack in operation. The correlation information indicates a correlation between a state of the hydrogen cell stack and a feature amount converted from at least the distribution information in the hydrogen cell stack in states, including a normal state and one or more abnormal states.

In addition, in order to achieve the above object, a program according to one aspect of the present invention causes a computer to execute a method for determining a state of a hydrogen cell stack. The program causes the computer to function as a means of executing an acquisition step and a determination step. In the acquisition step, at least distribution information is acquired. The distribution information indicates the distribution of a physical quantity in the hydrogen cell stack. The hydrogen cell stack generates water from hydrogen or hydrogen from water by an electrochemical reaction. In the determination step, on the basis of the correlation information, a state of the hydrogen cell stack is determined from at least the distribution information of the hydrogen cell stack in operation. The correlation information indicates a correlation between a state of the hydrogen cell stack and a feature amount converted from at least the distribution information in the hydrogen cell stack in states, including a normal state and one or more abnormal states.

More features and advantages of the present invention will become more apparent from the embodiments described below.

### Advantageous Effects of the Invention

According to the present invention, a state of a hydrogen cell stack can be detected in real time.

### Brief Description of Drawings

Fig. 1 is a schematic diagram illustrating a configuration example of a hydrogen electrochemical system according to a first embodiment.
Fig. 2 is a perspective view illustrating a configuration example of a hydrogen cell in the first embodiment.
Fig. 3 is an exploded perspective view of the hydrogen cell in the first embodiment.
Fig. 4 is a conceptual diagram illustrating a conversion example from a physical quantity to a feature amount.
Fig. 5 is a flowchart for explaining one example of a method for determining a state of the hydrogen cell stack in the first embodiment.
Fig. 6 is a flowchart for explaining one example of a method for determining a conversion model by generating correlation information in the first embodiment.
Fig. 7 is a schematic diagram illustrating a conversion example of the feature amount using distribution information in the first embodiment.
Fig. 8 is a graph illustrating one example in which feature amounts are sorted into a normal state and L types of abnormal states, using a virtual space in the first embodiment.
Fig. 9 is a flowchart for explaining one example of the method for determining a state of the hydrogen cell stack in operation, on the basis of the correlation information in the first embodiment.
Fig. 10 is a schematic diagram illustrating a determination example of a state of the hydrogen cell stack in operation, on the basis of the correlation information in the first embodiment.
Fig. 11 is a flowchart for explaining one example of a method for determining a conversion model by generating the correlation information, in a first variation of the first embodiment.
Fig. 12 is a schematic diagram illustrating a conversion example of the feature amount, using the distribution information in the first variation of the first embodiment.
Fig. 13 is a graph illustrating one example in which feature amounts are sorted into the normal state and the L types of abnormal states, using a virtual space in the first variation of the first embodiment.
Fig. 14 is a flowchart for explaining one example of the method for determining a state of the hydrogen cell stack in operation, on the basis of the correlation information in the first variation of the first embodiment.
Fig. 15 is a schematic diagram illustrating a determination example of a state of the hydrogen cell stack in operation, on the basis of the correlation information in the first variation of the first embodiment.
Fig. 16 is a flowchart for explaining one example of the method for determining a state of the hydrogen cell stack in a second variation of the first embodiment.
Fig. 17 is a schematic diagram illustrating a machine learning example of a classifier using the distribution information in the second variation of the first embodiment.
Fig. 18 is a schematic diagram illustrating a determination example of a state of the hydrogen cell stack in operation, using the classifier in the second variation of the first embodiment.
Fig. 19 is a schematic diagram illustrating a configuration example of the hydrogen electrochemical system according to a second embodiment.
Fig. 20 is a perspective view illustrating a configuration example of the hydrogen cell in the second embodiment.
Fig. 21 is an exploded perspective view of the hydrogen cell in the second embodiment.

### List of Reference Signs

100 ... hydrogen electrochemical system, 101 ... hydrogen cell stack unit, 1011 ... fuel cell, 1012 ... hydrogen generation device, 102 ... control unit, 103 ... material supply unit, 104 ... supply fluid control unit, 105 ... discharge fluid control unit, 106 ... discharging unit, 1 ... hydrogen cell stack, 10, 10a ... hydrogen cell, 11 ... electrolyte membrane, 12, 12a ... anode electrode, 121, 121a ... anode catalyst layer, 122, 122a ... anode gas diffusion layer, 13, 13a ... cathode electrode, 131, 131a ... cathode catalyst layer, 132 ... cathode gas diffusion layer, 132a ... cathode water transport layer, 14 ... separator, 141 ... anode-side flow channel, 142 ... cathode-side flow channel, 2 ... end plate, 21, 23 ... supply port, 211, 231 ... supply channel, 22, 24 ... discharge port, 221, 241 ... discharge channel, 3 ... sensor, 31 ... main sensor, 32 ... sub-sensor, 321 ... voltage sensor, 51 ... input unit, 52 ... informing unit, 53 ... storage unit, 54 ... state determination unit, 541 ... acquisition unit, 542 ... conversion unit, 543 ... correlation information generation unit, 544 ... determination unit, 545 ... learning unit, Di ... input information, Ds ... simulation data, Ds1 ... operation information, Ds2 ... distribution information, Ds3 ... detection information, De ... experiment data, De1 ... operation information, De2 ... distribution information, De3 ... detection information, Dt ... monitoring data, Dt1 ... operation information, Dt2 ... distribution information, Dt3 ... detection information, Dc ... correlation information, Q ... physical quantity, Qm ... main physical quantity, Qs ... sub-physical quantity, Ic ... classifier, S, Sa, Sb ... stack direction

### Description of Embodiments

Hereinafter, with reference to the drawings, embodiments of the present invention are described.

### < 1. First Embodiment >

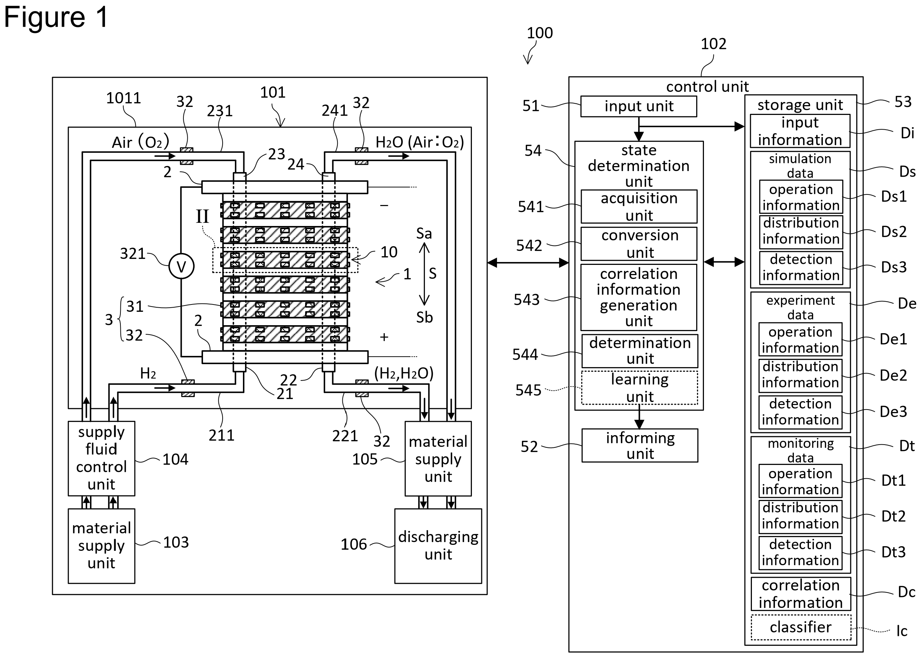

Fig. 1 is a schematic diagram illustrating a configuration example of a hydrogen electrochemical system 100 according to a first embodiment. The hydrogen electrochemical system 100 includes a hydrogen cell stack unit 101, a control unit 102, a material supply unit 103, a supply fluid control unit 104, a discharge fluid control unit 105, and a discharging unit 106.

The hydrogen cell stack unit 101 generates water from hydrogen or hydrogen from water by an electrochemical reaction. The hydrogen cell stack unit 101 according to this embodiment is a solid polymer type fuel cell (PEFC: polymer electrolyte fuel cell) 1011, which generates water by the electrochemical reaction using hydrogen (hydrogen gas), so as to generate electricity, and outputs the electric power to the outside. The control unit 102 controls various components of the hydrogen electrochemical system 100 (e.g., the hydrogen cell stack unit 101, the material supply unit 103, the supply fluid control unit 104, the discharge fluid control unit 105, and the discharging unit 106). Further, the control unit 102 also functions as a state determination device that determines a state of the hydrogen cell stack unit 101 in real time. The material supply unit 103 is connected to the hydrogen cell stack unit 101 via supply fluid control unit 104, so as to supply the hydrogen cell stack unit 101 with fluid to become a material. Note that the supplied fluid is, for example, air (or oxygen gas), hydrogen gas, vapor or the like. The supply fluid control unit 104 controls pressure, flow rate, or the like of the above fluid supplied from the material supply unit 103 to the hydrogen cell stack unit 101. The discharge fluid control unit 105 controls the pressure, the flow rate, or the like of the fluid that is discharged from the hydrogen cell stack unit 101 to the discharging unit 106. Note that the discharged fluid is, for example, water in liquid phase, surplus air (or oxygen gas), surplus hydrogen gas, vapor, or the like. The discharging unit 106 is connected to the hydrogen cell stack unit 101 via discharge fluid control unit 105, so as to treat the fluid discharged from the hydrogen cell stack unit 101. The discharging unit 106 may be, for example, a mechanism for discharging the fluid to the outside by opening to the atmosphere, or a mechanism for trapping and storing the fluid in a storage tank or the like.

In the hydrogen cell stack unit 101, as described later, hydrogen gas is supplied to an anode electrode 12, and air (or oxygen gas) is supplied to a cathode electrode 13. In addition, in the solid polymer type fuel cell of this embodiment, a cation exchange membrane is used for an electrolyte membrane 11, and hydrogen ions move from the anode electrode 12 to the cathode electrode 13. The solid polymer type fuel cell generates water by the electrochemical reaction in the cathode electrode 13, and generates electricity so as to output the electric power to the outside.

However, without limitation to this example, the hydrogen cell stack unit 101 may be a fuel cell other than solid polymer type. For instance, the hydrogen cell stack unit 101 may be a solid oxide type fuel cell (SOFC: solid oxide fuel cell), an alkaline type fuel cell (AFC: alkaline fuel cell), a phosphoric acid type fuel cell (PAFC: phosphoric acid fuel cell), a molten carbonate type fuel cell (MCFC: molten carbonate fuel cell), or the like. In the solid oxide type fuel cell, an oxygen ion conductive oxide such as YSZ (yttria stabilized Zirconia) is used for the electrolyte membrane, and oxygen ions move from the cathode electrode to the anode electrode. The solid oxide type fuel cell generates water by the electrochemical reaction at the anode electrode, and generates electricity so as to output the electric power to the outside. In the alkaline type fuel cell, potassium hydroxide (KOH) solution is used for the electrolyte layer, and hydroxide ions (OH-) move from the cathode electrode to the anode electrode. The alkaline type fuel cell generates water by the electrochemical reaction at the anode electrode, and generates electricity so as to output the electric power to the outside. In the phosphoric acid type fuel cell, phosphoric acid (H₃PO₄) solution is used for the electrolyte layer, and hydrogen ions move from the anode electrode to the cathode electrode. The phosphoric acid type fuel cell generates water by the electrochemical reaction at the cathode electrode, and generates electricity so as to output the electric power to the outside. In the molten carbonate type fuel cell, molten carbonate supported in porous ceramics (such as LiAlO₂) is used for the electrolyte layer, and carbonate ions move from the cathode electrode to the anode electrode. The molten carbonate is an electrolyte in liquid phase consisting of carbonate of sodium (Na) and carbonate of potassium (K) or the like, for example. The molten carbonate type fuel cell generates water by the electrochemical reaction at the anode electrode. The control unit 102 can determine a state of the hydrogen cell stack unit 101 in real time, even if the hydrogen cell stack unit 101 is the above-mentioned fuel cell other than fuel cell solid polymer type.

### < 1-1. Hydrogen Cell Stack Unit 101 >

The hydrogen cell stack unit 101 (the fuel cell 1011) includes a hydrogen cell stack 1, a set of end plates 2, and a sensor 3. The hydrogen cell stack 1 is a stacked product in which a plurality of hydrogen cells 10 are stacked in one direction S.

### < 1-1-1. Hydrogen Cell 10 >

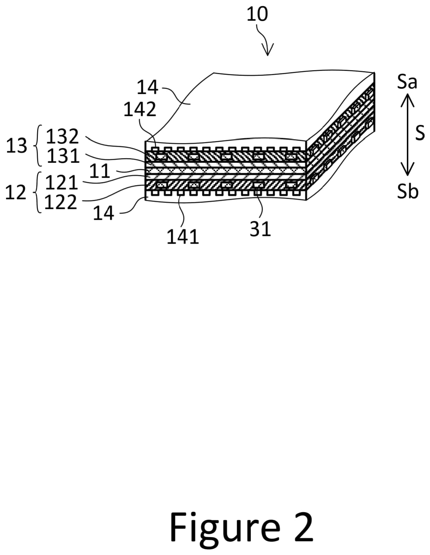

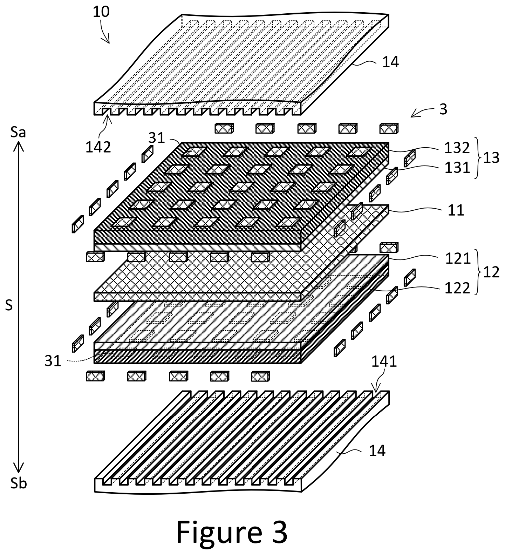

Fig. 2 is a perspective view illustrating a configuration example of the hydrogen cell 10. Fig. 3 is an exploded perspective view the hydrogen cell 10. Note that Fig. 2 corresponds to the hydrogen cell 10 disposed at a part II surrounded by a broken line in Fig. 1. In addition, in this specification, a stack direction of the plurality of hydrogen cells 10, which is a direction from one side to the other of the upper side and the lower side of the sheet of Fig. 2 and Fig. 3, is referred to as a "stack direction S". In the stack direction S, a direction from the lower side to the upper side of the sheet of Fig. 2 and Fig. 3 is referred to as a "stack direction Sa", while a direction from the upper side to the lower side of the sheet of Fig. 2 and Fig. 3 is referred to as a " stack direction Sb".

As illustrated in Fig. 2 and Fig. 3, the hydrogen cell 10 includes the electrolyte membrane 11, the anode electrode 12, the cathode electrode 13, and a separator 14. The anode electrode 12 includes an anode catalyst layer 121 and an anode gas diffusion layer 122. The cathode electrode 13 includes a cathode catalyst layer 131 and a cathode gas diffusion layer 132. In the stack direction Sa, these are stacked in order of the separator 14, the anode gas diffusion layer 122, the anode catalyst layer 121, the electrolyte membrane 11, the cathode catalyst layer 131, the cathode gas diffusion layer 132, and the separator 14.

### < 1-1-1-1. Electrolyte Membrane 11 >

The electrolyte membrane 11 is an ion-exchange membrane made of a solid polymer material such as a fluorocarbon resin material and a hydrocarbon resin material, and extends in a direction crossing the stack direction Sa (e.g., a direction perpendicular to the same). The electrolyte membrane 11 is a proton exchange membrane made of Nafion (registered trademark) in this embodiment, and has good proton conductivity in a wet condition.

### < 1-1-1-2. Anode Electrode 12 >

The anode electrode 12 generates hydrogen ions and electrons e by oxidation reaction of hydrogen gas using a catalyst, and supplies hydrogen ions to the electrolyte membrane 11. Note that the hydrogen ions move from the anode electrode 12 through the electrolyte membrane 11 to the cathode electrode 13. In addition, the electrons e, which are generated at the same time, move to the anode electrode 12 of the hydrogen cell 10 adjacent in the stack direction Sa or the end plate 2 on the stack direction Sa side. In this way, a DC current flowing in the stack direction Sb is generated in the hydrogen cell stack unit 101.

The anode catalyst layer 121 of the anode electrode 12 is a porous layer in which the catalyst is supported in the porous body. The catalyst includes, for example, at least one of noble metals such as Pt (platinum), Ru (ruthenium), and Ir (iridium), and an oxide of Ru, Ir, or the like. The porous body is made of carbon or the like and extends in a direction crossing the stack direction Sb (e.g., a direction perpendicular to the same). In this embodiment, the anode catalyst layer 121 is a porous layer in which the Pt catalyst is supported in the porous body made of carbon, and is disposed and stacked on the stack direction Sb side of the electrolyte membrane 11.

The anode catalyst layer 121 preferably further includes an ionomer, and more preferably includes an ionomer containing an organic fluorine compound electrolyte. As the anode catalyst layer 121 includes the ionomer, it is easier to arrange the anode catalyst layer 121 in the electrolyte membrane 11. As the ionomer contains moisture in the hydrogen gas, conductivity of protons (i.e., hydrogen ions) in the anode catalyst layer 121 is improved. Note that residual hydrogen gas means hydrogen gas that was not used in the electrochemical reaction. However, this example does not exclude a configuration in which the anode catalyst layer 121 does not include the ionomer.

The anode gas diffusion layer 122 is a porous layer having gas permeability and electrical conductivity. The anode gas diffusion layer 122 extends in a direction crossing the stack direction Sb (e.g., a direction perpendicular to the same), and is disposed and stacked on the stack direction Sb side of the anode catalyst layer 121. The anode gas diffusion layer 122 is a porous body constituted of intertwining metal fibers, a sintered body of metal particles, or the like, for example. In addition, the metal is Ti (titanium) or the like.

### < 1-1-1-3. Cathode Electrode 13>

The cathode electrode 13 generates water by a reaction of hydrogen ions that move through the electrolyte membrane 11, the electrons e that has moved from the stack direction Sb side, and oxygen in the air (or oxygen gas). Note that the water is discharged to the outside as vapor together with residual air (or oxygen gas).

The cathode catalyst layer 131 of the cathode electrode 13 is a porous layer in which the catalyst is supported in the porous body. The catalyst contains, for example, at least one of Pt (platinum), Pt-coated titanium, carbon carrying Pt, carbon carrying Pd (palladium), cobalt glyoxime, nickel glyoxime, and the like. The porous body is made of carbon or the like, and extends in a direction crossing the stack direction Sa (e.g., a direction perpendicular to the same). In this embodiment, the cathode catalyst layer 131 is a porous layer in which the Pt catalyst is supported in the porous body made of carbon, and is disposed and stacked on the stack direction Sa side of the electrolyte membrane 11.

The cathode catalyst layer 131 preferably further includes an ionomer, and more preferably includes an ionomer containing an organic fluorine compound electrolyte. As the cathode catalyst layer 131 includes the ionomer, it is easier to arrange the cathode catalyst layer 131 in the electrolyte membrane 11. As the ionomer contains the water in liquid phase generated on the cathode electrode 13 side, conductivity of protons (i.e., hydrogen ions) in the cathode catalyst layer 131 is improved. Note that residual oxygen gas means oxygen gas that was not used in the electrochemical reaction. However, this example does not exclude a configuration in which the cathode catalyst layer 131 does not include the ionomer.

The cathode gas diffusion layer 132 is a porous layer having gas permeability and electrical conductivity. The cathode gas diffusion layer 132 extends in a direction crossing the stack direction Sa (e.g., a direction perpendicular to the same), and is disposed and stacked on the stack direction Sa side of the cathode catalyst layer 131. The cathode gas diffusion layer 132 is, for example, intertwining carbon fibers, or a carbon porous body.

### < 1-1-1-4. Separator 14 >

The separator 14 extends in a direction crossing the stack direction S (e.g., a direction perpendicular to the same), and is disposed and stacked on the stack direction Sa side and on the stack direction Sb side of the hydrogen cell 10. The separator 14 is a member having gas impermeability made of a conductive material. As the material of the separator, for example, metal material such as stainless steel or Al (aluminum), carbon material, carbon-containing composite resin material, or the like is used.

An anode-side flow channel 141 dented in the stack direction Sb is disposed on the surface of the separator 14 contacting the anode electrode 12. The hydrogen gas (and water oozing out from the electrolyte membrane 11) flows in the anode-side flow channel 141. The hydrogen gas diffuses from the anode-side flow channel 141 into the anode electrode 12. In this embodiment, a plurality of the anode-side flow channels 141 extend in one direction crossing the stack direction S, and are arranged in parallel in a direction perpendicular to the one direction. However, the form of the anode-side flow channel 141 is not limited to the example described above.

In addition, a cathode-side flow channel 142 dented in the stack direction Sa is disposed on the surface of the separator 14 contacting the cathode electrode 13. The air (or oxygen gas) and water generated in the hydrogen cell 10 flow in the cathode-side flow channel 142. The water is discharged from the cathode electrode 13 to the cathode-side flow channel 142, together with an air flow (or the residual oxygen gas). In this embodiment, a plurality of the cathode-side flow channels 142 extend in one direction crossing the stack direction S, and is arranged in parallel in a direction perpendicular to the one direction. However, the form of the cathode-side flow channel 142 is not limited to the example described above.

Preferably, inner surfaces of the anode-side flow channels 141 and the cathode-side flow channels 142 are water-repellent treated. In this way, it is possible to prevent the vapor from being liquefied and accumulated in the anode-side flow channels 141 and in the cathode-side flow channels 142. Therefore, the hydrogen electrochemical system 100 can suppress generation of flooding in the hydrogen cell stack unit 101 (the fuel cell 1011).

### < 1-1-2. End Plate 2 >

Each of the end plates 2 has a plate-like shape extending in a direction crossing the stack direction S (e.g., a direction perpendicular to the same), and is disposed to contact each end of the hydrogen cell stack 1 in the stack direction S. As the material of each end plate 2, for example, a conductive material such as a metal such as stainless steel or Al (aluminum), or an alloy thereof is used. A current terminal is disposed on each end plate 2. The electric power generated by the hydrogen cell stack unit 101 (the fuel cell 1011) is output from the current terminal to the outside.

In addition, a supply port 21 and a discharge port 22 are disposed in the end plate 2 on the stack direction Sb side.

A supply channel 211 of the hydrogen gas is connected to the supply port 21, and is connected to the anode-side flow channels 141 of each separator 14, through the supply port 21 and a through hole (not shown) disposed in the hydrogen cell stack 1. In this way, the hydrogen gas supplied from the supply channel 211 is supplied to the anode-side flow channels 141 of each hydrogen cell 10, and is diffused from the anode-side flow channels 141 into the anode electrode 12.

In addition, a discharge channel 221 is connected to the discharge port 22, and is connected to the anode-side flow channels 141 of each separator 14, through the discharge port 22 and another through hole (not shown) disposed in the hydrogen cell stack 1. In this way, in each hydrogen cell 10, water oozing out from the electrolyte membrane 11 and the residual hydrogen gas are discharged from the anode electrode 12 to the anode-side flow channels 141, and are discharged from the discharge channel 221 through the discharge port 22 to the outside.

A supply port 23 and a discharge port 24 are disposed in the end plate 2 on the stack direction Sa side.

A supply channel 231 of air (or oxygen gas) is connected to the supply port 23, and is connected to the cathode-side flow channels 142 of each separator 14, through the supply port 23 and a through hole (not shown) disposed in the hydrogen cell stack 1. In this way, the air (or oxygen gas) supplied from the supply channel 231 is supplied to the cathode-side flow channels 142 of each hydrogen cell 10, and is diffused from the cathode-side flow channels 142 into the cathode electrode 13.

In addition, a discharge channel 241 is connected to the discharge port 24, and is connected to the cathode-side flow channels 142 of each separator 14, through the discharge port 24 and another through hole (not shown) disposed in the hydrogen cell stack 1. In this way, water generated in each hydrogen cell 10 and the residual air (or oxygen gas) are discharged from the cathode electrode 13 to the cathode-side flow channels 142, and are discharged from the discharge channel 241 through the discharge port 24 to the outside.

### < 1-1-3. Sensor 3 >

The sensor 3 detects a physical quantity Q of the hydrogen cell stack unit 101 (the fuel cell 1011). Note that in this embodiment, the physical quantity Q includes a main physical quantities Qm and a sub-physical quantity Qs. The main physical quantities Qm are one or more types of physical quantities, which is used for determining a state of the hydrogen cell stack unit 101, and is acquired by, for example, a multi-point measurement, or measurement or calculation in a plurality of different modes. The main physical quantities Qm are physical quantities of the same type at points distributed in a k-dimensional manner in the hydrogen cell stack unit 101 (in particular, the hydrogen cell stack 1). Note that k is 1, 2, or 3, and k = 3 holds in this embodiment. The sub-physical quantities Qs are one or more types of physical quantities, which are used for determining a state of the hydrogen cell stack unit 101 in an auxiliary manner. In this embodiment, the sub-physical quantities Qs are physical quantities at one or more points in the hydrogen cell stack unit 101. However, this example does not exclude a configuration in which at least one type of the sub-physical quantity Qs is a physical quantities of the same type at points distributed in a k-dimensional manner in the hydrogen cell stack unit 101 (in particular, the hydrogen cell stack 1). In addition, the example described above does not exclude a configuration in which the physical quantity Q includes the main physical quantity Qm but does not include the sub-physical quantity Qs.

The sensor 3 includes a plurality of main sensors 31 and sub-sensors 32.

Each main sensor 31 is disposed on the side face and/or the inside of the hydrogen cell stack 1 (e.g., at least one of the anode electrode 12 and the cathode electrode 13). Each main sensor 31 detects the main physical quantities Qm at a k-dimensional distribution position in the hydrogen cell stack 1 in real time, and outputs the same to the control unit 102. For instance, in this embodiment, the plurality of the main sensors 31 detect the main physical quantities Qm distributed in a three-dimensional manner in real time.

Note that in the following description, unless otherwise noted, a configuration in which the main sensors 31 are distributed in a three-dimensional manner in the hydrogen cell stack 1 is exemplified and described. In addition, "three-dimensional distribution" means distribution in a real space (three-dimensional space) consisting of the stack direction S, and two directions which are perpendicular to the stack direction S and are orthogonal to each other. For instance, in Fig. 3, in each hydrogen cell 10, a plurality of the main sensors 31 are disposed on lateral surfaces of the anode electrode 12 (in particular, the anode gas diffusion layer 122), and a plurality of the same are disposed in a two-dimensional manner on an end surface on the stack direction Sb side of the anode electrode 12 (in particular, the anode gas diffusion layer 122). Further, a plurality of the main sensors 31 are disposed on lateral surfaces of the cathode electrode 13 (in particular, the cathode gas diffusion layer 132), and a plurality of the same are disposed in a two-dimensional manner on an end surface on the stack direction Sa side of the cathode electrode 13 (in particular, the cathode gas diffusion layer 132). The main sensors 31 are distributed and disposed so that performance of the hydrogen cell stack 1 is not affected. The same is true for the sub-sensors 32 disposed in the hydrogen cell stack 1.

The main physical quantities Qm detected by the main sensor 31 includes at least one of a magnetic field, an electric field, temperature, humidity, and the like. For instance, in this embodiment, the main sensor 31 is a magnetic sensor element such as a Hall element, and detects three-dimensional distribution of the magnetic field in the hydrogen cell stack 1.

For instance, the sub-sensor 32 is disposed in the hydrogen cell stack 1, the supply channel 211, 231, the discharge channel 221, 241, and the like, and detects the sub-physical quantity Qs of the hydrogen cell stack unit 101 in real time, and outputs the same to the control unit 102. For instance, the sub-physical quantity Qs detected by the sub-sensor 32 includes at least one of temperature, humidity, pressure, flow rate, and the like of the gas supplied to or discharged from the supply channel 211, 231, and the discharge channel 221, 241.

In addition, in this embodiment, the sub-sensor 32 includes a voltage sensor 321. The voltage sensor 321 detects a voltage generated in the hydrogen cell stack unit 101 (the fuel cell 1011) (in other words, a potential difference between the end plates 2: see Fig. 1 and the like) in real time, and outputs the same to the control unit 102. In other words, the sub-physical quantity Qs further includes the voltage detected by the voltage sensor 321 (in other words, the voltage generated in the hydrogen cell stack unit 101).

### < 1-2. Control Unit 102 >

Next, a configuration of the control unit 102 is described. As illustrated in Fig. 1, the control unit 102 includes an input unit 51, an informing unit 52, a storage unit 53, and a state determination unit 54, and is equipped with a computer including one or more arithmetical units such as a processor or a microprocessor, for example. The control unit 102 controls each component of the hydrogen electrochemical system 100, using a program and information (data) stored in the storage unit 53.

The input unit 51 receives a user's operation input and the like, and outputs the same to the storage unit 53 and the state determination unit 54.

The informing unit 52 includes a display, a speaker, or the like, so as to notify externally, by screen display, sound output, or the like.

The storage unit 53 is a nonvolatile storage medium that maintains memories even when power supply is cut off. The storage unit 53 stores input information Di, simulation data Ds, experiment data De, monitoring data Dt, correlation information Dc, and the like, for example. In addition, the storage unit 53 also stores various programs and data, which can be read and executed by a component of the hydrogen electrochemical system 100 (e.g., a computer provided to the control unit 102). For instance, the storage unit 53 stores a program for allowing the computer to function as a means of performing a method for determining a state of the hydrogen cell stack 1, as described later.

The input information Di is stored information based on the operation input received by the input unit 51.

The simulation data Ds is a computer simulation result of the main physical quantity Qm and the sub-physical quantity Qs indicated by the hydrogen cell stack unit 101, in various states including a normal state and one or more abnormal states (i.e., one abnormal state or a plurality of different abnormal states). The simulation data Ds may be a simulation result by the control unit 102, performed on the basis of a detection result acquired from the sensor 3 by an acquisition unit 541 described later, or simulation data acquired from outside by the acquisition unit 541.

The simulation data Ds includes operation information Ds1, distribution information Ds2, detection information Ds3, and the like.

The operation information Ds1 indicates operation environment setting and condition of the hydrogen cell stack unit 101 in the computer simulation, and an operation result thereof. Note that the operation result indicates whether or not it was the normal state in which it works normally, an abnormal state that has occurred, and the like. There are L types of abnormal states. Note that L is an integer of one or more. The L types of abnormal states include, for example, flooding, dry-out, deterioration of the electrolyte membrane 11, poisoning of a catalyst, deterioration of the catalyst, and deficiency of an electrochemical reaction material. Note that the abnormal states may further include an unknown abnormality (e.g., an abnormality of unknown cause) in addition to the above-mentioned states.

The flooding is a phenomenon in which the material (e.g., water) generated by the electrochemical reaction is accumulated in the hydrogen cell stack unit 101 (in particular, the hydrogen cell stack 1).

The dry-out is a phenomenon in which the electrolyte membrane 11, the anode electrode 12 (in particular, the ionomer included therein), or the cathode electrode 13 (in particular, the ionomer included therein) is dried. In the dry-out phenomenon, conductivity of ions (such as hydrogen ions) is decreased in the electrolyte membrane 11 (and each electrode 12 or 13).

The deterioration of the electrolyte membrane 11 is a phenomenon in which the electrolyte membrane 11 is chemically or mechanically deteriorated. The deterioration of the electrolyte membrane 11 causes a reversible decrease in conductivity of ions (such as hydrogen ions) in the electrolyte membrane 11.

The poisoning of a catalyst is a phenomenon in which an impurity (such as arsenic or sulfur and a compound thereof, or carbon monoxide) contained in the electrochemical reaction material (e.g., hydrogen gas or air (or oxygen gas)), which is supplied to the hydrogen cell stack 1, causes a reversible or irreversible decrease in activity of the catalyst included in the anode catalyst layer 121 and the cathode catalyst layer 131.

The deterioration of the catalyst is a phenomenon in which activity of the catalyst is decreased or disappeared, which is caused by a characteristic change in the catalyst or breakage or peel-off of the catalyst material carrier, due to chemical reaction in the anode catalyst layer 121 and the cathode catalyst layer 131, abnormal temperature rise in the anode catalyst layer 121 and the cathode catalyst layer 131, or the like.

The deficiency of an electrochemical reaction material is a phenomenon in which a material that reacts electrochemically in the hydrogen cell stack 1 becomes lacking, and is caused by a lack of supply the reaction material or the like. Note that the reaction material is, for example, hydrogen gas or air (or oxygen gas).

The distribution information Ds2 indicates amounts detected by the main sensor 31 at distribution positions. In detail, the distribution information Ds2 indicates, for example, the main physical quantities Qm in the hydrogen cell stack 1 (such as magnetic field, electric field, temperature, or humidity), and a k-dimensional distribution (e.g., a three-dimensional distribution) of each main physical quantity Qm in the hydrogen cell stack 1.

The detection information Ds3 indicates an amount detected by the sub-sensor 32. The detection information Ds3 indicates, for example, the sub-physical quantity Qs in the hydrogen cell stack 1, and indicates, for example, temperature, humidity, pressure, flow rate, or the like of the gas supplied to or discharged from the supply channel 211, 231, and the discharge channel 221, 241, and a voltage value of the hydrogen cell stack 1 (or a potential difference between the end plates 2). Note that if the sub-physical quantity Qs includes a physical quantity distributed in a three-dimensional manner, the detection information Ds3 may further indicate three-dimensional distribution of the physical quantity.

Next, the experiment data De indicates a real-time experiment result of the main physical quantity Qm and the sub-physical quantity Qs detected from the hydrogen cell stack unit 101, which is in various operating states including the normal state and one or more abnormal states (i.e., one abnormal state or a plurality of different abnormal states). The experiment data De may be an experiment result acquired by the acquisition unit 541 from the sensor 3 in the hydrogen electrochemical system 100, or may be data of the experiment result acquired by the acquisition unit 541 from the outside. The experiment data De includes operation information De1, distribution information De2, detection information De3, and the like. The operation information De1 indicates the operation environment setting and condition of the hydrogen cell stack unit 101 when acquiring the experiment result, and the operation result thereof. The distribution information De2 indicates a real-time detection result of the main physical quantities Qm output from the main sensor 31 of the hydrogen cell stack unit 101, and three-dimensional distribution of each main physical quantity Qm, when acquiring the experiment result. The detection information De3 indicates a real-time detection result of the sub-physical quantity Qs output from the sub-sensor 32 of the hydrogen cell stack unit 101, when acquiring the experiment result. Note that if the sub-physical quantity Qs includes a physical quantity distributed in a three-dimensional manner, detection information De3 may further indicate three-dimensional distribution of the physical quantity.

The monitoring data Dt indicates a real-time detection result of the main physical quantity Qm and the sub-physical quantity Qs detected from an object whose operating state is to be determined (i.e., the hydrogen cell stack unit 101 in operation). The monitoring data Dt is a real-time detection result acquired from the sensor 3 by the acquisition unit 541 in the hydrogen electrochemical system 100. The hydrogen electrochemical system 100 determines a state of the hydrogen cell stack 1 from the monitoring data Dt, which is the real-time detection result of each physical quantity Q (such as the main physical quantity Qm and the sub-physical quantity Qs) in the hydrogen cell stack 1 in operation. The monitoring data Dt includes operation information Dt1, distribution information Dt2, detection information Dt3, and the like. The operation information Dt1 indicates the operation environment setting and condition of the hydrogen cell stack unit 101 in operation, and the operation result thereof. The distribution information Dt2 indicates a real-time detection result of the main physical quantities Qm output from the main sensor 31 of the hydrogen cell stack unit 101 in operation, and three-dimensional distribution of each main physical quantity Qm. The detection information Dt3 indicates a real-time detection result of the sub-physical quantity Qs output from the sub-sensor 32 of the hydrogen cell stack unit 101 in operation. Note that if the sub-physical quantity Qs includes a physical quantity distributed in a three-dimensional manner, the detection information Dt3 may further indicate three-dimensional distribution of each physical quantity.

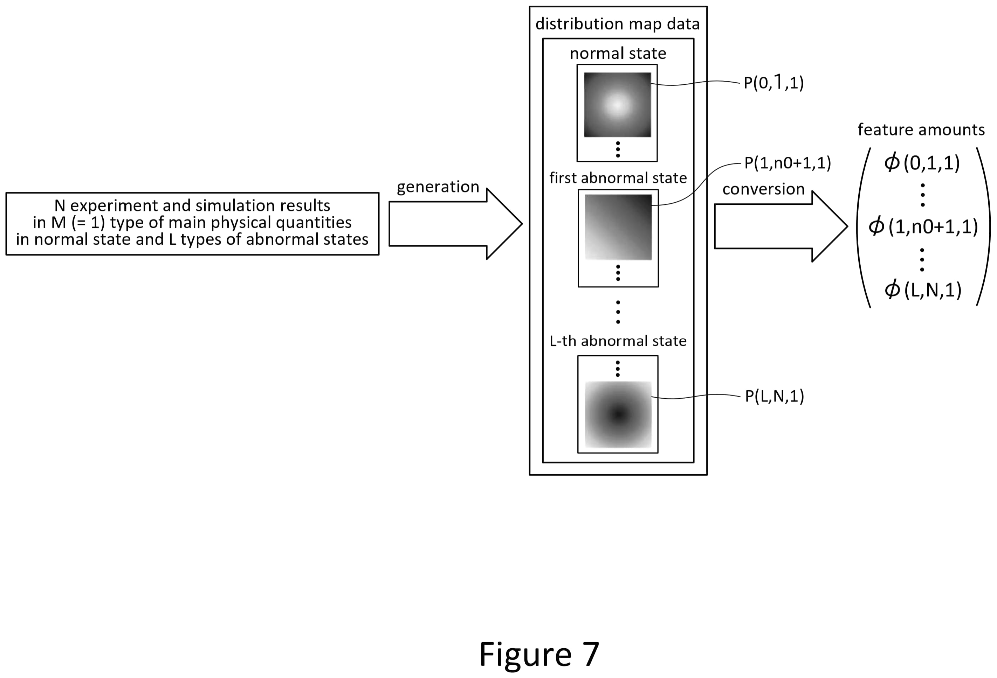

The correlation information Dc indicates a correlation between feature amounts φ(0, 1, 1) to φ(L, N, M) converted from the main physical quantities Qm and the operating state of the hydrogen cell stack 1 (see Fig. 7 etc. described later). In the following description, the feature amount φ(0, 1, 1) to φ(L, N, M) may be referred to as a "feature amount φ".

Note that as described above, "F" is the number of states of the hydrogen cell stack 1. In detail, F types of states include one type of normal state and L types of different abnormal states. In other words, F = (1 + f) holds. "F" is an integer of two or more. "L" is an integer of one or more. In addition, "f" is an ordinal number for identifying one type of normal state and L types of different abnormal states, and is expressed by an integer of 0 or more and F or less.

N is a total number of the main physical quantities Qm of the same type acquired from the hydrogen cell stack 1 in the same state, and is an integer of two or more. In detail, N is a total sum of the numbers n0, n1, ..., nL of the main physical quantities Qm of the same type acquired from the hydrogen cell stack 1 of individual states. In other words, N = Σnf = n0 + n1 + ... + nL holds. Further, n0 is the number of the main physical quantities Qm of the same type acquired from the hydrogen cell stack 1 in the normal state. In the same manner, n2 to nL are the numbers of the main physical quantities Qm of the same type acquired from the hydrogen cell stack 1 in the first to L-th abnormal states, respectively. Note that in this specification, n0, n1, ..., nL may be collectively referred to as "nf", and is expressed by an integer of one or more and N or less.

In addition, the numbers nf of the main physical quantities Qm of different types acquired from the hydrogen cell stack 1 in the same state are all the same in this embodiment. For instance, the numbers n0 of the main physical quantities Qm of individual types in the hydrogen cell stack 1 in the normal state are all the same. In the same manner, the numbers n1 to nL of the main physical quantities Qm of individual types in the hydrogen cell stack 1 in the first to L-th abnormal states are also all the same.

However, without limitation to the example described above, it does not exclude a configuration where in the hydrogen cell stack 1 in at least one type of state, the numbers nf of the main physical quantities Qm of some types are different from the numbers nf of the main physical quantities Qm of other types. Further, the example described above does not also exclude a configuration where in the hydrogen cell stack 1 in at least one type of state, the numbers nf of the main physical quantities Qm of all types are different from each other.

"M" is a total number of types of the main physical quantities Qm, and is expressed by an integer of one or more. Further, "m" is an ordinal number for identifying a type of the main physical quantities Qm, and is expressed by an integer of one or more and M or less.

For instance, the feature amount φ(0, n, m) is a feature amount φ converted from an n-th physical quantity of a m-th type of the main physical quantities Qm acquired from the hydrogen cell stack 1 in the normal state. In addition, the feature amount φ(1, n, m) is a feature amount φ converted from the n-th physical quantity of the m-th type of the main physical quantities Qm acquired from the hydrogen cell stack 1 in the first abnormal state. In addition, the feature amount φ(f, n, m) is a feature amount φ converted from the n-th physical quantity of the m-th type of the main physical quantities Qm acquired from the hydrogen cell stack 1 in an f-th abnormal state.

The state determination unit 54 determines a state of the hydrogen cell stack 1 in operation, on the basis of the correlation information Dc, from at least the distribution information Dt2 of the monitoring data Dt of the hydrogen cell stack 1 in operation. For instance, the state determination unit 54 reads the corresponding program and data, and the like from the storage unit 53, so as to perform determination of a state of the hydrogen cell stack 1. However, this example does not exclude a configuration in which the above determination of a state of the hydrogen cell stack 1 is realized by hardware.

The state determination unit 54 includes the acquisition unit 541, a conversion unit 542, a correlation information generation unit 543, and a determination unit 544.

The acquisition unit 541 acquires the physical quantity Q, and acquires at least the distribution information Ds2, De2, Dt2, which indicates distribution of the main physical quantity Qm in the hydrogen cell stack 1, which generates water from hydrogen or hydrogen from water by an electrochemical reaction, for example. In this embodiment, the acquisition unit 541 acquires the operation information Ds1, De1, Dt1, the distribution information Ds2, De2, Dt2, the detection information Ds3, De3, Dt3, and the like, of the hydrogen cell stack 1. For instance, the acquisition unit 541 acquires the physical quantity Q of the hydrogen cell stack unit 101 in various states, which include the normal state and plurality of different abnormal states. Note that the above information may be data acquired by the hydrogen electrochemical system 100, or may be data input from the outside.

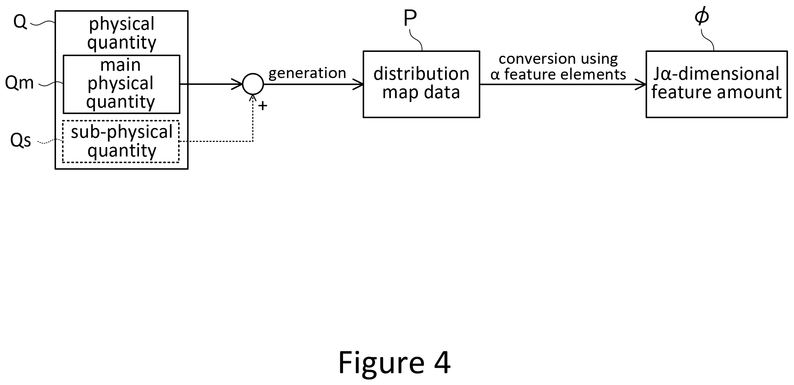

The conversion unit 542 converts each of the main physical quantities Qm into the feature amount φ. Fig. 4 is a conceptual diagram illustrating a conversion example from the physical quantity Q to the feature amount φ. In this embodiment, the conversion unit 542 generates distribution map data P(0, 1, 1) to P(L, N, M) from the main physical quantities Qm acquired by the acquisition unit 541. Note that in this case, as illustrated by a broken line in Fig. 4, the sub-physical quantity Qs may be used. The distribution map data P(0, 1, 1) to P(L, N, M) are image data, and may be referred to as "distribution map data P" or "distribution map data P(f, n, m)" in the following description.

For instance, the conversion unit 542 generates the distribution map data P(f, n, m) from the main physical quantities Qm (and the sub-physical quantity Qs), by a specific calculation. The specific calculation and feature elements of the distribution map data P(f, n, m) are not particularly limited, and various ones can be used in accordance with the object. For instance, an existing method such as a regression method using at least the distribution information Ds2, De2, Dt2 can be used as the specific calculation.

The distribution map data P(f, n, m) are elements of a set of images Im. Note that the distribution map data P constituting a set P(m) is generated from the m-th type of the main physical quantities Qm acquired from the hydrogen cell stack 1 in the f-th state. In other words, the distribution map data P(f, n, m) can be expressed by the following mathematical expression 1. $P \left(f, n, m\right) ∈ Im$ (mathematical expression 1)

In addition, the conversion unit 542 converts the distribution map data P into an α-dimensional feature amount φ. In detail, the conversion unit 542 can convert the same into the feature amount φ by performing an operation such as extraction of feature elements of the distribution map data P, using an existing technique or the like. In this case, as the extracted feature elements, there are, for example, a color type of a pixel, intensity, brightness, chromaticness, color density distribution between neighboring pixels or within a pixel set range in a predetermined range, a rate of change in at least one of color intensity, brightness, and chromaticness, and the like.

The conversion unit 542 extracts feature elements of α types extracted from the distribution map data P, and converts into points digitalized on α-dimensional coordinate axes, by mapping E_α constituted of the above elements. Note that in this embodiment, "α" is the number of the feature elements to be extracted, and is an integer of one or more. In detail, the number α of the feature elements is expressed by the product of the number β of items of the feature elements and the number γ of types in each item. For instance, when the numbers of types of the feature elements of the items are γ1, γ2, ..., γβ, the number α of the feature elements can be expressed by the following expression 2. $α = \left(γ1+γ2+…+γβ\right)$ (mathematical expression 2)

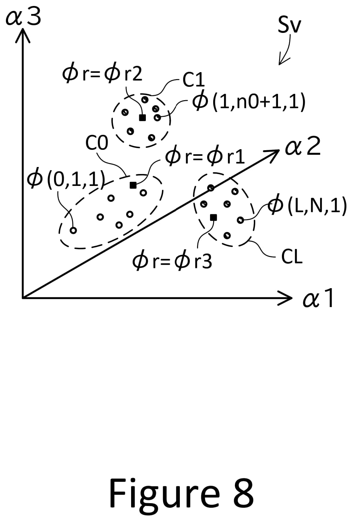

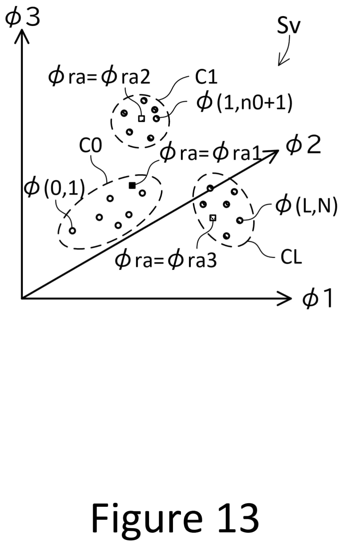

The above point digitalized on α-dimensional coordinate axes using the mapping E_α is the feature amount φ expressed by coordinates of the virtual space (feature space) Sv defined by the α dimension. For instance, the feature amount φ(f, n, m) converted from the distribution map data P(f, n, m) is the mapped point E_α(P(f, n, m)). In addition, the mapped point corresponds to the coordinates of the feature amount φ in the virtual space Sv in Fig. 8 and Fig. 13 that will be described later. In other words, the mapped point E_α(P(f, n, m)) is the feature amount φ(f, n, m) expressed as coordinates in the α-dimensional virtual space Sv, and is an element of a set Jα of α types of feature elements. The feature amount φ(f, n, m) and the mapped point E_α(P(f, n, m)) can be expressed by the following expression 3. $φ \left(f, n, m\right) = E_α \left(P\left(f, n, m\right)\right) ∈ Jα$ (mathematical expression 3)

In this embodiment, the conversion unit 542 extracts and digitizes α (= 3) feature elements from the distribution map data P, and sets the feature amount φ as the point mapped to three-dimensional coordinates having coordinate axes of the above digitized feature elements.

In addition, the conversion unit 542 can estimate another physical quantity Q from a specific physical quantity Q. For instance, in this embodiment, the conversion unit 542 estimates a current density distribution of the hydrogen cell stack 1 from a magnetic field distribution detected by each main sensor 31 (e.g., a Hall element), by inverse problem analysis. Further, the conversion unit 542 can convert magnetic field distribution information Ds2, De2, Dt2 into current density distribution information Ds2, De2, Dt2.

Note that at least either one of the conversion from the main physical quantities Qm (and the sub-physical quantity Qs) into the feature amount φ, and estimation and conversion from a specific physical quantity Q to another physical quantity Q may be performed in the outside of the hydrogen electrochemical system 100. In this case, the feature amount φ after the conversion and/or the physical quantity Q after the conversion is acquired by the acquisition unit 541. In addition, the example in this specification does not exclude a configuration in which the hydrogen electrochemical system 100 does not include the conversion unit 542.

The correlation information generation unit 543 establishes a correlation model of individual feature amounts φ(0, 1, 1) to φ(L, N, M) and F (= {1 + L}) types of the operating states of the hydrogen cell stack 1, and generates the correlation information Dc based on the correlation model. The correlation information Dc is stored in the storage unit 53. Note that in this embodiment, the feature amount φ is expressed using coordinates (see Fig. 8, Fig. 13, and the like). However, without limitation to this example, the feature amount φ may be expressed using a technique such as mathematical transform, encoding, missing value handling, clustering, principal component analysis, interaction, or feature selection, or may be expressed by appropriately combining these methods.

The determination unit 544 determines a state of the hydrogen cell stack 1 from the monitoring data Dt of the hydrogen cell stack 1 in operation. For instance, the determination unit 544 determines a state of the hydrogen cell stack 1 from at least the distribution information Dt2 of the monitoring data Dt of the hydrogen cell stack 1 in operation, on the basis of the correlation information Dc.

### < 1-2-1. Determination of State of Hydrogen Cell Stack 1 >

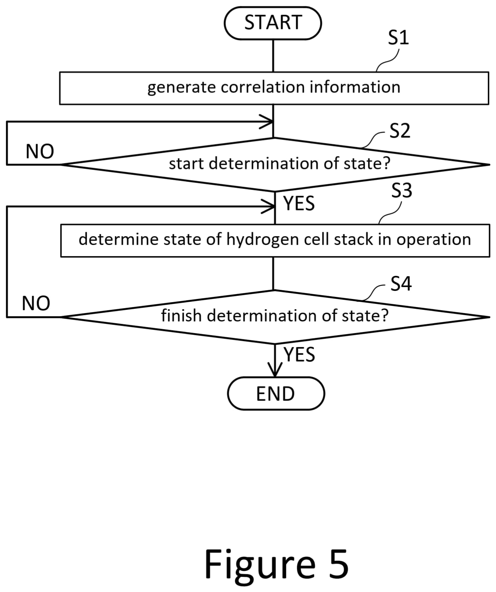

Next, with reference to Fig. 5, a determination example of a state of the hydrogen cell stack 1 in the hydrogen electrochemical system 100 is described. Fig. 5 is a flowchart for explaining the method for determining a state of the hydrogen cell stack according to the first embodiment 1.

As illustrated in Fig. 5, in order to first determine a conversion model from the main physical quantities Qm (and the sub-physical quantity Qs) to the feature amount φ, the hydrogen electrochemical system 100 generates the correlation information Dc using the simulation data Ds and the experiment data De (Step S1). After that, for example, when the input unit 51 receives an operation input indicating start of determination of a state of the hydrogen cell stack 1 in operation (Yes in Step S2), the hydrogen electrochemical system 100 determines a state of the hydrogen cell stack 1 from the monitoring data Dt, on the basis of the correlation information Dc (Step S3).

Further, for example, until the input unit 51 receives an operation input indicating finish of determination of a state of the hydrogen cell stack 1 in operation, the determination of a state in Step S3 is performed repeatedly. In other words, if the above operation input indicating finish of determination of a state is not received (No in Step S4), the process returns to Step S3. In this way, the hydrogen electrochemical system 100 can determine a state of the hydrogen cell stack 1 in operation, in real time. On the other hand, when the above operation input indicating finish of determination of a state is received (Yes in Step S4), the real-time determination process of a state of the hydrogen cell stack 1 is finished.

### < 1-2-2. Determination Example of Conversion Model >

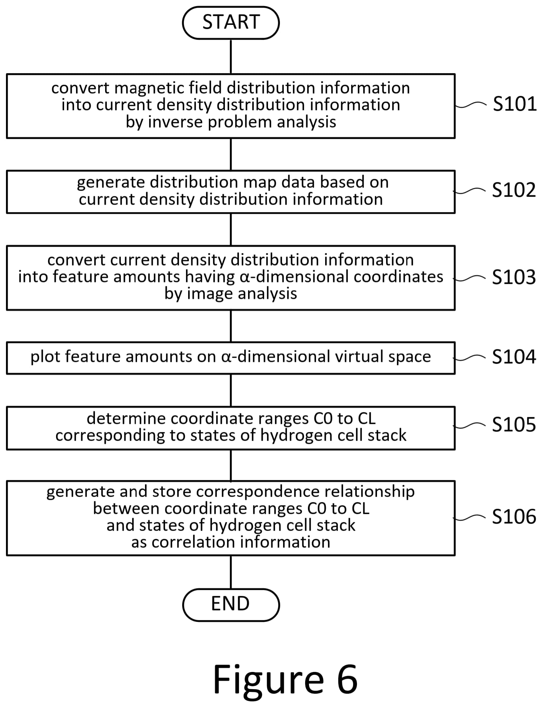

With reference to Figs. 6 to 8, a determination example of the conversion model by generating the correlation information Dc is described. Fig. 6 is a flowchart for explaining one example of a method for determining the conversion model by generating the correlation information Dc in the first embodiment. Fig. 7 is a schematic diagram illustrating a conversion example of the feature amounts φ(0, 1, 1) to φ(L, N, M), using the distribution information Ds2, De2 in the first embodiment. Fig. 8 is a graph illustrating one example in which the feature amounts φ(0, 1, 1) to φ(L, N, M) are sorted into the normal state and the L types of abnormal states, using the virtual space Sv in the first embodiment. Note that Fig. 7 corresponds to Step S1 of Fig. 5.

Note that in Figs. 6 to 8, the current density distribution estimated from the magnetic field is converted into feature amounts φ(0, 1, 1) to φ(L, N, 1) having three-dimensional coordinates, and the correlation information Dc is generated on the basis of the same. In other words, M = 1 and α = 3 holds. In addition, in Figs. 6 to 8, for easy description, the numbers n0 to nL of the experiment and simulation results in the normal state and the first to L-th abnormal states are each set to six. However, without limitation to this example, the numbers n0 to nL of the experiment and simulation results in the normal state and the first to L-th abnormal states may be each a plural number other than six, and they may not be the same number. In addition, each of the first to L-th abnormal states indicates a state where one of the flooding, the dry-out, the deterioration of the electrolyte membrane 11, the poisoning of a catalyst, the deterioration of the catalyst, and the deficiency of an electrochemical reaction material (and unknown abnormality) is generated. In addition, as the case where α = 3 holds is exemplified here, the virtual space Sv of Fig. 8 is expressed by three dimensions constituted of the X, Y, and Z directions. Each of the X axis, the Y axis, and the Z axis is one of three types of feature elements by the regression method, which is converted from the current density distribution estimated by the inverse problem analysis from the detection result of the magnetic field of the monitoring data Dt.

First, as illustrated in Fig. 6, the conversion unit 542 converts the N magnetic field distributions included in the distribution information Ds2, De2 into N current density distributions, respectively, by the inverse problem analysis (Step S101). In addition, as illustrated in Fig. 7, the conversion unit 542 generates N current density distribution map data P(0, 1, 1) to P(L, N, 1), on the basis of N current density distribution information (Step S102). Further, the conversion unit 542 performs image analysis of the n current density distribution map data P(0, 1, 1) to P(L, N, 1), and converts the current density distribution information into N feature amounts φ having three α (= 3) dimensional coordinates (Step S103). For instance, a plurality of pixels constituting each distribution map data can be sorted into a predetermined pixel range by a finite element method or the like. Therefore, as α (= 3) coordinate axes of the feature amount φ, for example, one of an average value, a dispersion, a distortion degree, a moment, a gradient, and the like of luminance, brightness, hue, chromaticness, or the like in each pixel range is adopted.

For instance, in Fig. 7, the feature amounts in the normal state are φ(0, 1, 1), ..., φ(0, n0, 1). Note that α1 coordinate values of φ(0, 1, 1), φ(0, 2, 1), ..., φ(0, n0, 1) are respectively first feature amounts converted from the distribution map data P(0, 1, 1), P(0, 2, 1), ..., P(0, n0, 1) (e.g., the average values described above). Further, α2 coordinate values of φ(0, 1, 1), φ(0, 2, 1), ..., φ(0, n0, 1) are respectively second feature amounts converted from the distribution map data P(0, 1, 1), P(0, 2, 1), ..., P(0, n0, 1) (e.g., the dispersions described above). Further, α3 coordinate values of φ(0, 1, 1), φ(0, 2, 1), ..., φ(0, n0, 1) are respectively third feature amounts converted from the distribution map data P(0, 1, 1), P(0, 2, 1), ..., P(0, n0, 1) (e.g., the distortion degrees described above).

In Fig. 7, the feature amounts in the first abnormal state are φ(1, n0 + 1, 1), ..., φ(1, n0 + n1, 1). Note that the α1 coordinate values of φ(1, n0 + 1, 1), ..., φ(1, n0 + n1, 1) are respectively the first feature amounts converted from the distribution map data P(1, n0 + 1, 1), ..., P(1, n0 + n1, 1) (e.g., the average values described above). The α2 coordinate values of φ(1, n0 + 1, 1), ..., φ(0, n0 + n1, 1) are respectively the second feature amounts converted from the distribution map data P(1, n0 + 1, 1), ..., P(1, n0 + n1, 1) (e.g., the dispersions described above). The α3 coordinate value of φ(0, n0 + 1, 1), ..., φ(0, n0 + n1, 1) are respectively the third feature amounts converted from the distribution map data P(1, n0 + 1, 1), ..., P(1, n0 + n1, 1) (e.g., the distortion degrees described above).

In addition, in Fig. 7, the feature amounts in the L-th abnormal state are φ(L, N-nL + 1, 1), ..., φ(L, N, 1). Note that the α1 coordinate values of φ(L, N-nL + 1, 1), ..., φ(L, n, 1) are respectively the first feature amounts converted from the distribution map data P(L, N-nL + 1, 1), ..., P(L, N, 1) (e.g., the average values described above). The α2 coordinate value of φ(L, 6N-nL + 1, 1), ..., φ(L, N, 1) are respectively the second feature amounts converted from the distribution map data P(L, N-nL + 1, 1), ..., P(L, N, 1) (e.g., the dispersions described above). The α3 coordinate value of φ(L, N-nL + 1, 1), ..., φ(L, N, 1) are respectively the third feature amounts converted from the distribution map data P(L, N-nL + 1, 1), ..., P(L, N, 1) (e.g., the distortion degrees described above).

Next, as illustrated in Fig. 8, the correlation information generation unit 543 plots the feature amounts φ(0, 1, 1) to φ(L, N, 1) on the α (= 3) dimensional virtual space Sv (Step S104). Then, the correlation information generation unit 543 determines coordinate ranges C0 to CL corresponding to the states of the hydrogen cell stack 1, on the basis of the feature amounts φ(0, 1, 1) to φ(0, N, 1) in each state (Step S105). For instance, the correlation information generation unit 543 determines the coordinate range C0 corresponding to the normal state, on the basis of the feature amounts φ(0, 1, 1) to φ(0, n0, 1) in the normal state. Further, the correlation information generation unit 543 determines the coordinate ranges C1 to CL corresponding to the first to L-th abnormal states, respectively, on the basis of the feature amounts φ(1, n0 + 1, 1) to φ(1, n0 + n1, 1) in the first abnormal state, ..., the feature amounts φ(L, N-nL + 1, 1) to φ(L, N, 1) in the L-th abnormal state. Note that in Fig. 8, for easy understanding of the graph, the coordinate ranges C2 to C(L - 1) corresponding to the second to (L - 1)th abnormal state are not illustrated.

A means of determining the coordinate ranges C0 to CL is not particularly limited. For instance, the coordinate ranges C0 to CL of individual states (classes) can be set using decision boundaries, which are obtained by solving a multiclass classification problem in machine learning of a support vector machine (SVM) or the like.

Alternatively, the coordinate ranges C0 to CL can be set using a statistical method or the like. For instance, the correlation information generation unit 543 may calculate a peak top value Va, a minimum value Vb, and a maximum value Vc of the distribution in each coordinate value of the feature amounts φ, and may set a lower limit value and an upper limit value of each coordinate value in the coordinate ranges C0 to CL on the basis of the same. For instance, the lower limit value of each coordinate value may be a value (Va - A×|Va - Vb|), which is obtained by subtracting A (≥ 1) times of the absolute value of a difference between the peak top value Va and the minimum value Vb (|Va - Vb|) from the peak top value Va. Note that if Va - A×|Va - Vb| < 0 holds, the lower limit value is zero. In addition, the upper limit value of each coordinate value may be a value (Va + B×|Va - Vc|), which is obtained by adding B (≥ 1) times of the absolute value of a difference between the peak top value Va and the maximum value Vc (|Va - Vc|) to the peak top value Va.

The correlation information generation unit 543 generates the correlation information Dc, which is a correspondence relationship between the determined coordinate ranges C0 to CL and the F types of states of the hydrogen cell stack 1 (i.e., the normal state and the first to L-th abnormal states), and stores the correlation information Dc in the storage unit 53 (Step S106).

### < 1-2-3. Determination Example of State of Hydrogen Cell Stack 1 in Operation >

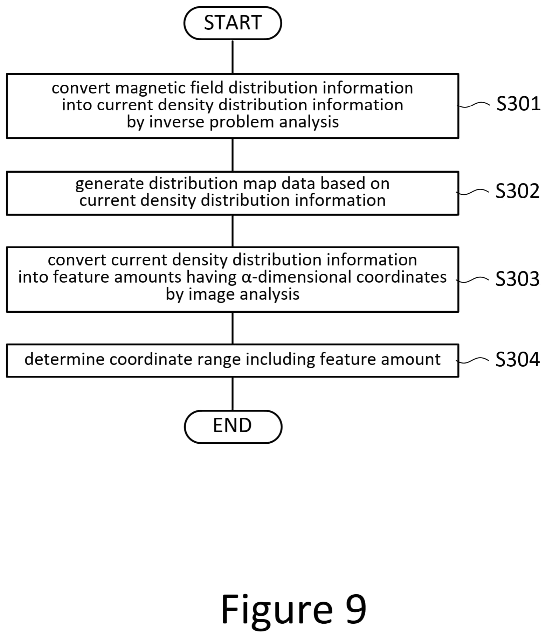

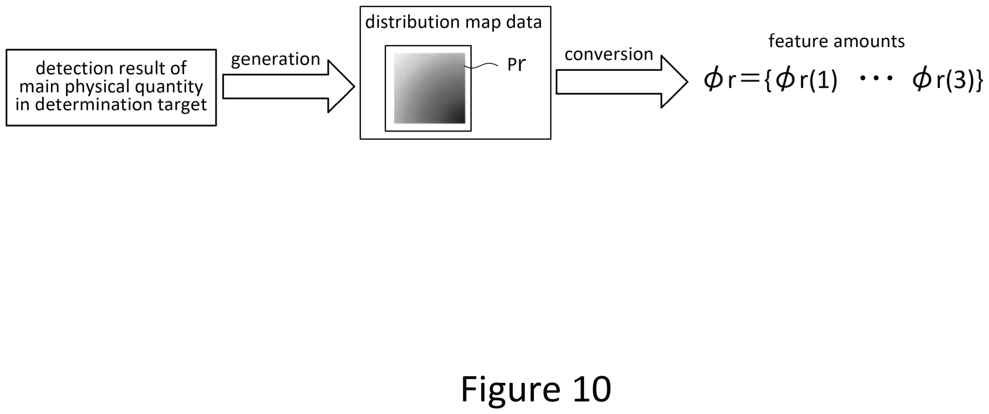

Next, with reference to Figs. 8 to 10, a determination example of a state of the hydrogen cell stack 1 in operation is described. Fig. 9 is a flowchart for explaining one example of determining a state of the hydrogen cell stack 1 in operation, on the basis of the correlation information Dc in the first embodiment. Fig. 10 is a schematic diagram illustrating a determination example of a state of the hydrogen cell stack 1 in operation, on the basis of the correlation information Dc in the first embodiment. Note that Fig. 9 corresponds to the process in Step S3 of Fig. 5.

As illustrated in Fig. 9, the conversion unit 542 first converts the magnetic field distribution information included in the distribution information Dt2 of the monitoring data Dt detected from the hydrogen cell stack 1 in operation, into the current density distribution information, by the inverse problem analysis (Step S301). In addition, as illustrated in Fig. 10, the conversion unit 542 generates current density distribution map data Pr on the basis of the current density distribution information (Step S302). Further, as illustrated in Fig. 10, the conversion unit 542 performs image analysis of the current density distribution map data Pr, and converts the current density distribution information into a feature amount φr having α (= 3) dimensional coordinates (Step S303).

Next, the determination unit 544 refers to the correlation information Dc, and determines which one of the coordinate ranges C0 to CL includes the feature amount φr in the virtual space Sv illustrated in Fig. 8 (Step S304). For instance, if the feature amount φr is included in the coordinate range C0 corresponding to the normal state as φr = φr1 in Fig. 8, the determination unit 544 determines that the hydrogen cell stack 1 in operation is operating in the normal state. Alternatively, if the feature amount φr is included in the coordinate range C1 corresponding to the first abnormal state as φr = φr2 in Fig. 8, the determination unit 544 determines that the hydrogen cell stack 1 in operation is in the first abnormal state. Alternatively, if the feature amount φr is included in the coordinate range CL corresponding to the L-th abnormal state as φr = φr3 in Fig. 8, the determination unit 544 determines that the hydrogen cell stack 1 in operation is in the L-th abnormal state. Note that if the feature amount φr is not included in one of the coordinate ranges C0 to CL, the determination unit 544 determines that the hydrogen cell stack 1 in operation is in an unknown abnormal state, for example. Then, the determination process of Fig. 9 is finished.

### < 1-2-4. Remarks >

Note that in the example described above, generation of the correlation information Dc and determination of a state of the hydrogen cell stack 1 in operation are performed, by using the distribution information Ds2, De2 of one type of the main physical quantities Qm (the current density distribution). However, without limitation to this example, they may be performed by using the distribution information Ds2, De2 of the main physical quantity Q other than current density distribution, or may be performed by using the distribution information Ds2, De2 of a plurality of types of the main physical quantities Qm.

### < 1-3. First Variation of First Embodiment >

In the example of the first embodiment described above, α feature amounts φ (average value, dispersion, distortion degree, and the like) are used for the coordinate axes α1, α2, α3 of the α-dimensional virtual space Sv. However, without limitation to this example, M main physical quantities Qm may be used for the coordinate values. In the following description, a configuration of a first variation that is different from that of the first embodiment is described. In addition, the same component as that of the first embodiment is denoted by the same numeral or symbol, and the description thereof may be omitted.

### < 1-3-1. Determination Example of Conversion Model >

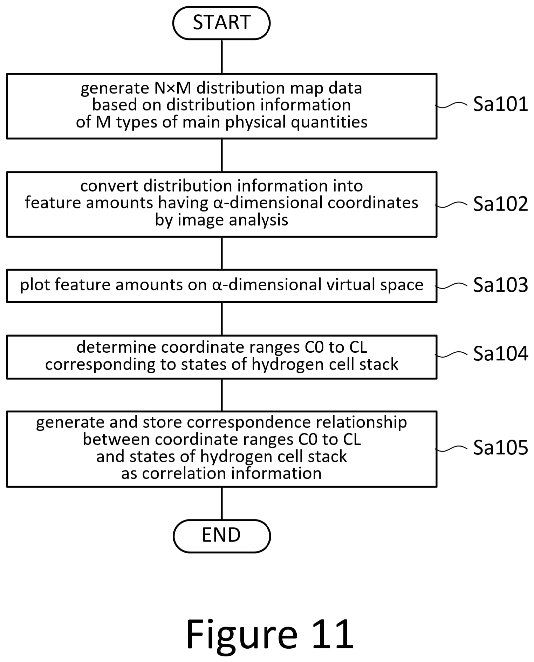

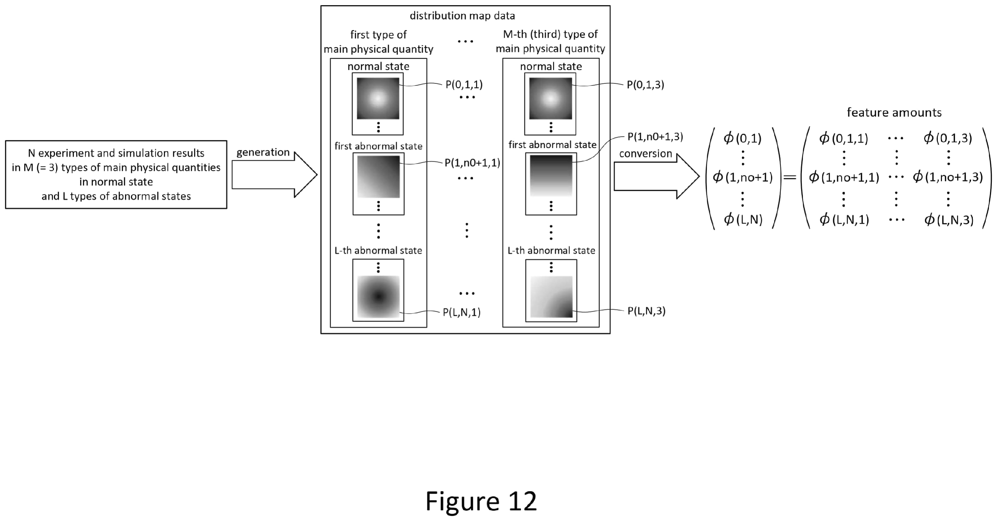

With reference to Figs. 11 to 13, the determination example of the conversion model by generating the correlation information Dc is described. Fig. 11 is a flowchart for explaining one example of the method for determining the conversion model, by generating the correlation information Dc in the first variation of the first embodiment. Fig. 12 is a schematic diagram illustrating the conversion example of the feature amounts φ(0, 1, 1) to φ(L, N, M), using the distribution information Ds2, De2 in the first variation of the first embodiment. Fig. 13 is a graph illustrating one example in which the feature amounts φ(0, 1, 1) to φ(L, N, M) are sorted into the normal state and the L types of abnormal states, using the virtual space Sv in the first variation of the first embodiment. Note that Fig. 11 corresponds to the process in Step S1 of Fig. 5.

Note that for easy understanding, in Fig. 12 and Fig. 13, distribution information of the M types of the main physical quantities Qm is converted into the feature amounts φ(0, 1, 1) to φ(L, N, M) having the three-dimensional coordinates φ1, φ2, φ3, and generates the correlation information Dc on the basis of the same. In other words, M = 3 and α = 3 holds. In addition, in Figs. 11 to 13, for easy description, the numbers of the experiment and simulation results in the normal state and the first to L-th abnormal states are each six. However, without limitation to this example, the numbers of the experiment and simulation results in the normal state and the first to L-th abnormal states may be each a plural number other than six, and they may not be the same number. In addition, each of the first to L-th abnormal states indicates a state where one of the flooding, the dry-out, the deterioration of the electrolyte membrane 11, the poisoning of a catalyst, the deterioration of the catalyst, and the deficiency of an electrochemical reaction material (and unknown abnormality) is generated. In addition, as the case where α = 3 holds is exemplified here, the virtual space Sv of Fig. 13 is expressed by three dimensions constituted of the X, Y, and Z directions. Each of the X axis, the Y axis, and the Z axis is the feature amount φ converted from the main physical quantities Qm included in the distribution information Ds2, De2 and the detection information Ds3, De3. For instance, the X axis is the feature amount φ converted from the current density estimated by the inverse problem analysis from the detection result of the magnetic field of the monitoring data Dt. The Y axis is the feature amount φ converted from a temperature detection result of the monitoring data Dt. The Z axis is the feature amount φ converted from a humidity detection result of the monitoring data Dt.

First, as illustrated in Fig. 11, the conversion unit 542 generates N×3 distribution map data P(0, 1, 1) to P(L, N, 3), on the basis of N distribution information Ds2, De2 in M (= 3) types of the main physical quantities Qm (Step Sa101). For instance, the conversion unit 542 generates N current density distribution map data P(0, 1, 1) to P(L, N, 1), N temperature distribution map data P(0, 1, 2) to P(L, N, 2), and n humidity distribution map data P(0, 1, 3) to P(L, N, 3), converted from the magnetic field distribution information by the inverse problem analysis, for each of N experiment and simulation results.

Next, the conversion unit 542 performs image analysis of N distribution map data P(0, 1, 1) to P(L, N, 3) for the main physical quantities Qm, and converts the distribution information Ds2, De2 of M (= 3) types of the main physical quantities Qm to N×3 feature amounts φ(0, 1, 1) to φ(L, N, 3) having α (= 3) dimensional coordinates (Step Sa102).

Next, as illustrated in Fig. 13, the correlation information generation unit 543 plots the feature amounts φ(0, 1, 1) to φ(L, N, M) on the α (= 3) dimensional virtual space Sv (Step Sa103). Then, the correlation information generation unit 543 determines the coordinate ranges C0 to CL corresponding to the states of the hydrogen cell stack 1, on the basis of the feature amounts φ(0, 1, 1) to φ(0, N, M) in each state (Step S104). For instance, the correlation information generation unit 543 determines the coordinate range C0 corresponding to the normal state, on the basis of the feature amounts φ(0, 1, 1) to φ(0, n0, 3) in the normal state. Further, the correlation information generation unit 543 determines the coordinate ranges C1 to CL corresponding to the first to L-th abnormal states, respectively, on the basis of the feature amounts φ(1, n0 + 1, 1) to φ(1, N0 + n1, 3) in the first abnormal state, ..., the feature amounts φ(L, N-nL + 1, 1) to φ(L, N, 3) in the L-th abnormal state. Note that in Fig. 13, for easy understanding of the graph, the coordinate ranges C2 to C(L - 1) corresponding to the second to (L - 1)th abnormal states are not illustrated. Note that the coordinate ranges C1 to CL are determined in the same manner as in the first embodiment, for example.

The correlation information generation unit 543 generates the correlation information Dc, which is a correspondence relationship between the determined coordinate ranges C0 to CL and the states of the hydrogen cell stack 1 (i.e., the normal state and the first to L-th abnormal states), and stores the correlation information Dc in the storage unit 53 (Step Sa105).

### < 1-2-2. Determination Example of State of Hydrogen Cell Stack 1 in Operation >

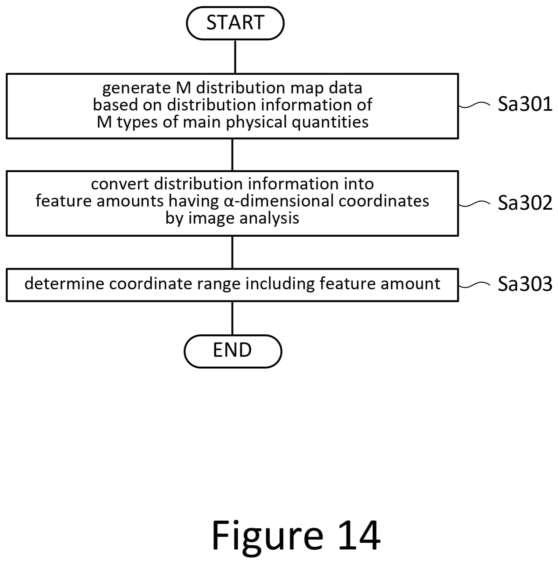

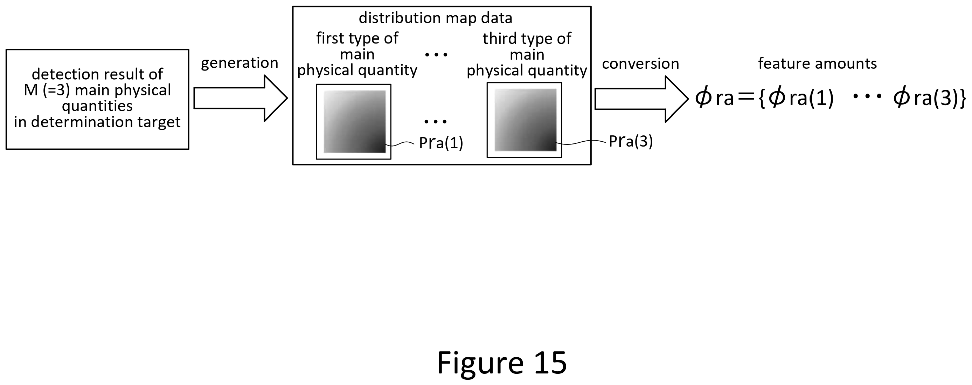

Next, with reference to Figs. 13 to 15, a determination example of a state of the hydrogen cell stack 1 in operation is described. Fig. 14 is a flowchart for explaining one example of determining a state of the hydrogen cell stack 1 in operation on the basis of the correlation information Dc. Fig. 15 is a schematic diagram illustrating a determination example of a state of the hydrogen cell stack 1 in operation, on the basis of the correlation information Dc in the first variation of the first embodiment. Note that Fig. 14 corresponds to the process in Step S3 of Fig. 5.

As illustrated in Fig. 15, the conversion unit 542 generates the distribution map data Pra(1) to Pra(3) of the main physical quantities Qm detected from the hydrogen cell stack 1 in operation (current density, temperature, and humidity estimated from the magnetic field), on the basis of the distribution information Dt2 (Step Sa301). Further, the conversion unit 542 performs image analysis of the distribution map data Pra(1) to Pra(3) as illustrated in Fig. 15, and converts the M (= 3) types of the main physical quantities Qm included in the monitoring data Dt into coordinate amounts φra(1) to φra(3) of the feature amount φra (Step Sa302).

Next, the determination unit 544 refers to the correlation information Dc, and determines which one of the coordinate ranges C0 to CL includes the feature amount φr in the virtual space Sv illustrated in Fig. 13 (Step Sa303). For instance, if the feature amount φr is included in the coordinate range C0 corresponding to the normal state as φra1 in Fig. 13, the determination unit 544 determines that the hydrogen cell stack 1 in operation is operating in the normal state. Alternatively, if the feature amount φr is included in the coordinate range C1 corresponding to the first abnormal state as φra2 in Fig. 13, the determination unit 544 determines that the hydrogen cell stack 1 in operation is in the first abnormal state. Alternatively, if the feature amount φr is included in the coordinate range CL corresponding to the L-th abnormal state as φra3 in Fig. 13, the determination unit 544 determines that the hydrogen cell stack 1 in operation is in the L-th abnormal state. Note that if the feature amount φr is not included in one of the coordinate ranges C0 to CL, the determination unit 544 determines that the hydrogen cell stack 1 in operation is in an unknown abnormal state, for example. Then, the determination process of Fig. 14 is finished.

### < 1-3-3. Remarks >

Note that as the coordinate axes of the α-dimensional virtual space Sv, the feature elements α1, α2, α3 of the distribution map data P generated from the main physical quantities Qm are used in the example of the first embodiment, and the feature amounts φ1, φ2, φ3 converted from the main physical quantities Qm are used in the example of the first variation of the first embodiment. However, the coordinate values of the α-dimensional virtual space Sv are not limited to these examples. For instance, the feature amounts φ of the M types of the main physical quantities Qm may be used as the coordinate values of the α-dimensional virtual space Sv.

### < 1-4. Second Variation of First Embodiment >

In the example of the first embodiment and the example of the first variation thereof described above, a state of the hydrogen cell stack 1 in operation is determined using the α-dimensional virtual space Sv. However, without limitation to this example, a state of the hydrogen cell stack 1 in operation may be determined using a classifier Ic trained by machine learning. In other words, the correlation information Dc may be training data of the classifier Ic after machine learning. In the following description, a configuration of a second variation is described, which is different from that of the first embodiment or the first variation thereof. In addition, the same component as that of the first embodiment or the first variation thereof is denoted by the same numeral or symbol, and the description thereof may be omitted.

In the second variation of the first embodiment, the state determination unit 54 includes a learning unit 545 (see Fig. 1). The learning unit 545 performs machine learning of the classifier Ic using the distribution information Ds2, De2 and/or the detection information Ds3, De3. The classifier Ic is a learning algorithm stored in the storage unit 53, and estimates a state of the hydrogen cell stack 1 in operation on the basis of the detection result of the sensor 3. The classifier Ic may be, for example, a linear classifier such as an SVM (support vector machine), or a classifier using a neural network, or a classifier generated by deep learning using a multilayer neural network. The learned neural network is, for example, a convolutional neural network (CNN), a Bayesian neural network (BNN), or the like.

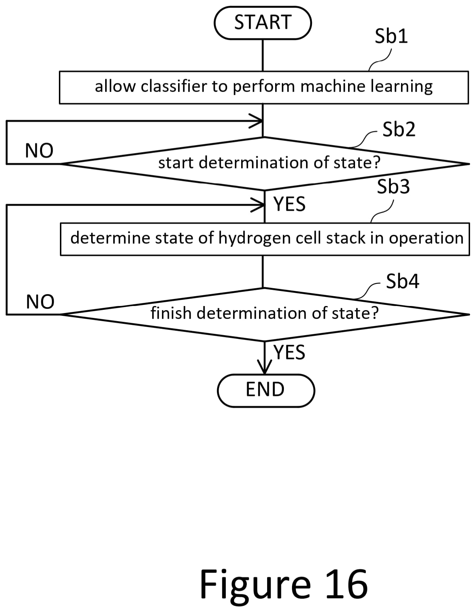

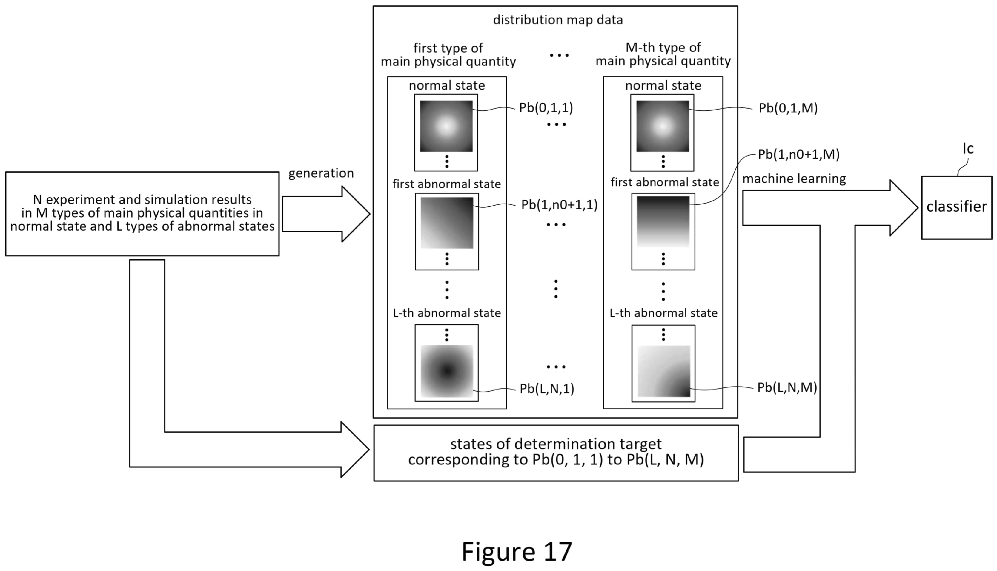

Fig. 16 is a flowchart for explaining one example of a method for determining a state of the hydrogen cell stack 1 in the second variation of the first embodiment. In the second variation of the first embodiment, as illustrated in Fig. 16, the hydrogen electrochemical system 100 first allows the classifier Ic to perform machine learning using the simulation data Ds and the experiment data De (Step Sb1). In other words, the learning unit 545 allows the classifier Ic to perform machine learning, on the basis of the main physical quantity Qm (and the sub-physical quantity Qs) acquired by the acquisition unit 541, and a state of the hydrogen cell stack 1 corresponding to the main physical quantities Qm (and the sub-physical quantity Qs). For instance, as illustrated in Fig. 17, the learning unit 545 inputs the simulation data Ds and the experiment data De as training data to an input layer of the neural network. Further, the learning unit 545 performs an operation by an error backpropagation method, for example, using output values of a plurality of neurons on an output layer of the neural network and the above-mentioned data Ds, De. In this case, the learning unit 545 updates weighting coefficients of the neural network, in order to maximize the output values of the neurons corresponding to the above-mentioned data Ds, De, among the plurality of neurons on the output layer. The learning unit 545 optimizes a weighting coefficients of the neural network, by performing the operation by the error backpropagation method for more of the simulation data Ds and the experiment data De.

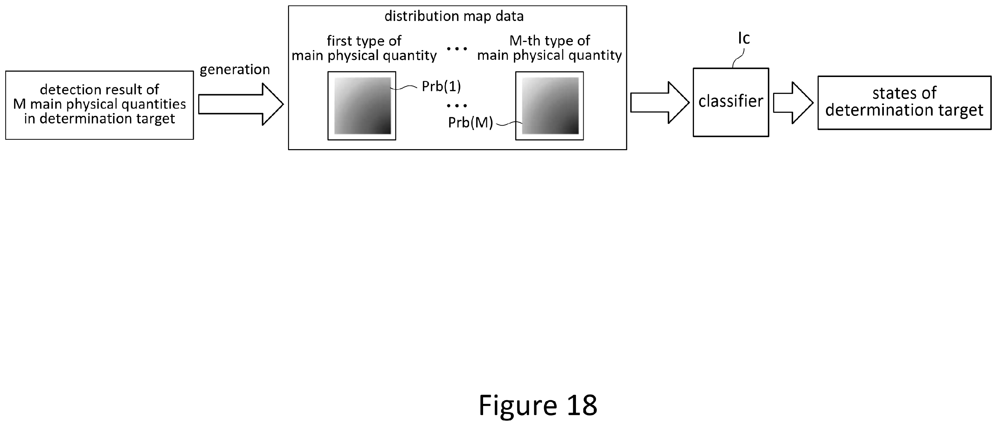

After that, for example, when the input unit 51 receives the operation input indicating start of determination of a state of the hydrogen cell stack 1 in operation (Yes in Step Sb2), the determination unit 544 determines a state of the hydrogen cell stack 1 in operation, using the classifier Ic as illustrated in Fig. 18, from the monitoring data Dt of the hydrogen cell stack 1 in operation (in particular, at least the distribution information Dt2) (Step Sb3).

Further, for example, until the input unit 51 receives the operation input indicating finish of determination of a state of the hydrogen cell stack 1 in operation, the determination of a state in Step Sb3 is performed repeatedly. In other words, if the above operation input indicating finish of determination of a state is not received (No in Step Sb4), the process returns to Step Sb3. In this way, also in the second variation of the first embodiment, the hydrogen electrochemical system 100 can determine a state of the hydrogen cell stack 1 in operation in real time. On the other hand, when the above operation input indicating finish of determination of a state is received (Yes in Step Sb4), the real-time determination process of a state of the hydrogen cell stack 1 illustrated in Fig. 16 is finished.

### < 2. Second Embodiment >

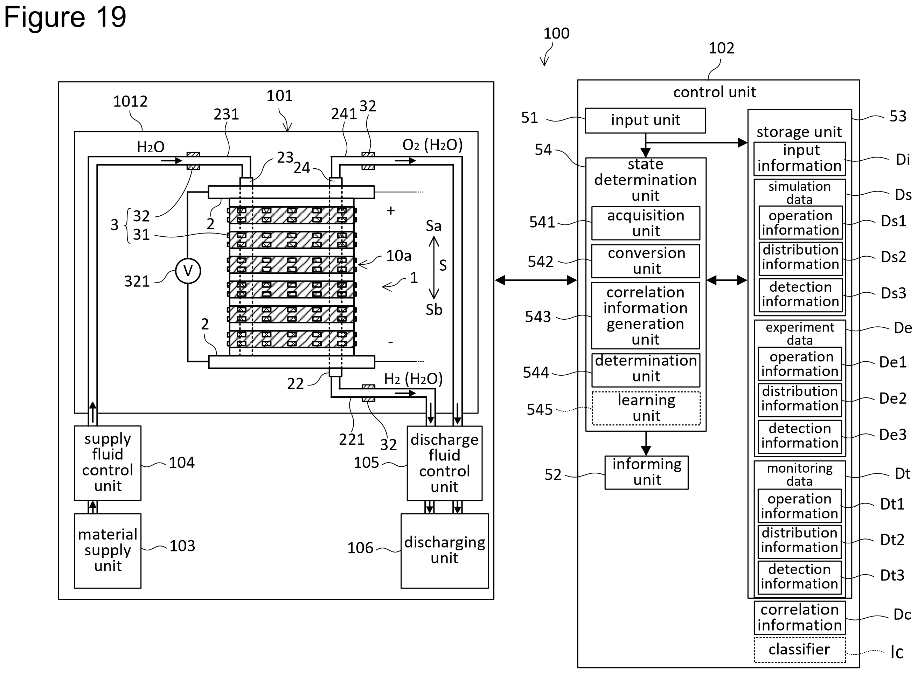

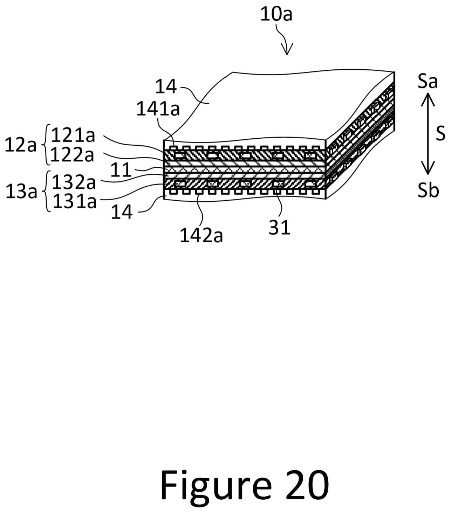

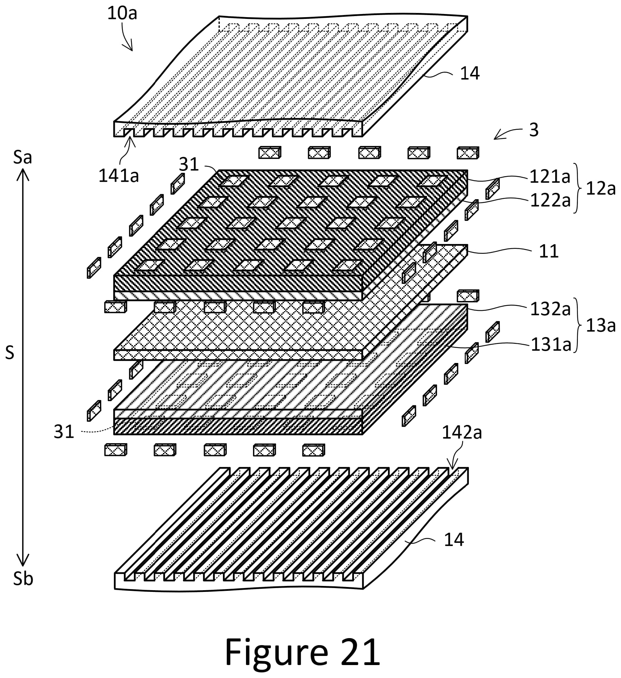

Next, with reference to Figs. 19 to 21, a second embodiment is described. Fig. 19 is a schematic diagram illustrating a configuration example of the hydrogen electrochemical system 100 according to a variation of the second embodiment. Fig. 20 is a perspective view illustrating a configuration example of a hydrogen cell 10a in the second embodiment. Fig. 21 is an exploded perspective view of the hydrogen cell 10a in the second embodiment. In the following description, a configuration of the hydrogen cell stack unit 101 according to the second embodiment is described, which is different from that of the above first embodiment or the first or second variation thereof. In addition, the same component as that of the first embodiment or the first or second variation thereof is denoted by the same numeral or symbol, and the description thereof may be omitted.

The hydrogen cell stack unit 101 according to the second embodiment is a hydrogen generation device 1012 that generates hydrogen by electrolysis reaction of water. The hydrogen generation device 1012 according to this embodiment is a solid polymer type water electrolysis device (PEMEC: polymer electrolyte membrane electrolyzer cell), and performs an electrochemical reaction using water in liquid phase (i.e., water electrolysis) by electric power supplied externally, so as to generate hydrogen gas. However, without limitation to this example, the hydrogen generation device 1012 may be a fuel cell other than solid polymer type. For instance, the hydrogen generation device 1012 may be a solid oxide type water electrolysis device (SOEC: solid oxide electrolysis cell), or may be a device that generates hydrogen gas by high-temperature steam electrolysis. Alternatively, the hydrogen generation device 1012 may be a device that generates hydrogen gas by electrolysis of alkaline water, and may be, for example, an alkaline water electrolysis device (AWE), an anion exchange type water electrolysis device (AEMWE: anion exchange membrane water electrolysis), or the like.

The control unit 102 controls components of the hydrogen electrochemical system 100 (e.g., the hydrogen generation device 1012, the material supply unit 103, the supply fluid control unit 104, the discharge fluid control unit 105, and the discharging unit 106), and also functions as the state determination device that determines a state of the hydrogen generation device 1012 in real time.

The material supply unit 103 supplies the fluid to become a material to the hydrogen generation device 1012 through the supply fluid control unit 104. Note that the supplied fluid is, for example, water in liquid phase, vapor, alkaline water, or the like. The supply fluid control unit 104 controls pressure, flow rate, or the like of the above-mentioned fluid supplied from the material supply unit 103 to the hydrogen generation device 1012. The discharge fluid control unit 105 controls pressure, flow rate, and the like of the fluid discharged from the hydrogen generation device 1012 to the discharging unit 106. Note that the discharged fluid is, for example, hydrogen gas, oxygen gas, vapor, or the like. The discharging unit 106 is connected to the hydrogen cell stack unit 101 via discharge fluid control unit 105, and treats the fluid discharged from the hydrogen cell stack unit 101. The discharging unit 106 may be, for example, a mechanism for discharging the fluid externally by opening to the atmosphere, or a mechanism for trapping and storing the fluid in a storage tank or the like.

In the hydrogen cell stack unit 101 according to the second embodiment, the anode of the fuel cell 1011 in the first embodiment described above functions as the cathode of the hydrogen generation device 1012. In addition, the cathode of the fuel cell 1011 in the first embodiment described above functions as the anode of the hydrogen generation device 1012. Other configuration is the same as that of the hydrogen cell stack unit 101 (the fuel cell 1011) according to the first embodiment described above.

A cathode electrode 12a of the hydrogen generation device 1012 includes a cathode catalyst layer 121a and a cathode water transport layer 122a. Note that the cathode water transport layer 122a is a porous layer having permeability and electrical conductivity. In the cathode electrode 12a, oxygen gas is generated, and hydrogen ions are also generated due to electrolysis of the supplied water. The oxygen gas is discharged together with surplus water from the cathode electrode 12a through a cathode-side flow channel 141a to the discharge channel 241. The hydrogen ions move to an anode electrode 13a through the electrolyte membrane 11.

The anode electrode 13a of the hydrogen generation device 1012 includes an anode catalyst layer 131a, and an anode gas diffusion layer 132a. In the anode electrode 13a, hydrogen gas is generated from the hydrogen ions. The hydrogen gas is discharged from the anode electrode 13a through an anode side flow channel 142a to the discharge channel 221, together with water oozing out from the electrolyte membrane 11 along with the generation of the hydrogen gas.

Also in the hydrogen electrochemical system 100 according to the second embodiment, a state of the hydrogen cell stack 1 can be determined in the same manner as in the first embodiment or the first or second variation thereof as described above.

### < 2. Remarks >

The embodiments of the present invention are described above. Note that the embodiment described above is merely an example, and the combination of the components and processes can be variously modified, which are within the scope of the present invention as one skilled in the art will understand.

### Industrial Applicability

The present invention is useful for a device, a system, a program, and the like, for evaluating a unit that generates water from hydrogen or hydrogen from water by an electrochemical reaction. Note that the evaluation includes determination of a state. In addition, the present invention can also be applied to a device, a system, a program, and the like, for evaluating a hydrogen cell stack or a hydrogen electrochemical system.

## Claims

1. A hydrogen electrochemical system comprising:
an acquisition unit configured to acquire at least distribution information indicating a distribution of a physical quantity in a hydrogen cell stack that generate water from hydrogen or hydrogen from water by an electrochemical reaction;
a storage unit configured to store correlation information indicating a correlation between a state of the hydrogen cell stack, and a feature amount converted from at least the distribution information in the hydrogen cell stack in states, including a normal state and one or more abnormal states; and
a determination unit configured to determine a state of the hydrogen cell stack from at least the distribution information of the hydrogen cell stack in operation, on the basis of the correlation information.

2. The hydrogen electrochemical system according to claim 1, wherein the physical quantity is at least one of temperature, humidity, electric field, and magnetic field.

3. The hydrogen electrochemical system according to claim 1 or 2, wherein the abnormal state includes at least one of:
flooding in which a material generated by the electrochemical reaction in the hydrogen cell stack is accumulated in the hydrogen cell stack;
dry-out in which an electrolyte membrane, an anode electrode, or a cathode electrode of the hydrogen cell stack is dried;
deterioration of the electrolyte membrane of the hydrogen cell stack;
poisoning of a catalyst included in the hydrogen cell stack;
deterioration of the catalyst included in the hydrogen cell stack; and
deficiency of an electrochemical reaction material in the hydrogen cell stack.

4. The hydrogen electrochemical system according to any one of claims 1 to 3, further comprising:
the hydrogen cell stack in which a plurality of hydrogen cells are stacked; and
a sensor configured to detect a distribution of the physical quantity in the hydrogen cell stack, wherein
the hydrogen cell includes an anode separator, an anode electrode, an electrolyte membrane, a cathode electrode, and a cathode separator, stacked in order, and
a plurality of the sensors are disposed on at least either one of the anode electrode and the cathode electrode.

5. The hydrogen electrochemical system according to any one of claims 1 to 4, further comprising a
conversion unit, wherein
the distribution information includes a magnetic field distribution in the hydrogen cell stack,
the conversion unit estimates and converts a current density distribution from the magnetic field distribution by inverse problem analysis, and
the determination unit determines a state of the hydrogen cell stack from at least the distribution information of the current density of the hydrogen cell stack in operation, on the basis of the correlation information.

6. The hydrogen electrochemical system according to claim 5, further comprising a learning unit,
wherein
the acquisition unit acquires a physical quantity of the hydrogen cell stack in states including the normal state and one or more abnormal states,
the learning unit generates a conversion model of the predetermined feature amount, on the basis of the physical quantity acquired by the acquisition unit, and
the conversion unit performs conversion to the feature amount using the conversion model.

7. The hydrogen electrochemical system according to any one of claims 1 to 5, further comprising a learning unit including a classifier, wherein
the acquisition unit acquires a physical quantity of the hydrogen cell stack in states including the normal state and one or more abnormal states,
the learning unit allows the classifier to perform machine learning, on the basis of the physical quantity acquired by the acquisition unit and a state of the hydrogen cell stack corresponding to the physical quantity, and
the determination unit uses the classifier, so as to determine a state of the hydrogen cell stack in operation from at least the distribution information of the hydrogen cell stack in operation.

8. A method for determining a state of a hydrogen cell stack, comprising:
an acquisition step of acquiring at least distribution information indicating a distribution of a physical quantity in a hydrogen cell stack that generate water from hydrogen or hydrogen from water by an electrochemical reaction; and
a determination step of determining a state of the hydrogen cell stack from at least the distribution information of the hydrogen cell stack in operation, on the basis of correlation information indicating a correlation between a state of the hydrogen cell stack, and a feature amount converted from at least the distribution information in the hydrogen cell stack in states, including a normal state and one or more abnormal states.

9. A program for causing a computer to execute a method for determining a state of a hydrogen cell stack, the method causing the computer to function as a means of executing:
an acquisition step of acquiring at least distribution information indicating a distribution of a physical quantity in a hydrogen cell stack that generate water from hydrogen or hydrogen from water by an electrochemical reaction; and
a determination step of determining a state of the hydrogen cell stack from at least the distribution information of the hydrogen cell stack in operation, on the basis of correlation information indicating a correlation between a state of the hydrogen cell stack, and a feature amount converted from at least the distribution information in the hydrogen cell stack in states, including a normal state and one or more abnormal states.
